(19) Europäisches Patentamt / European Patent Office / Office européen des brevets

(11) **EP 4 572 201 A1**

(12) **EUROPEAN PATENT APPLICATION**
published in accordance with Art. 153(4) EPC

(43) Date of publication:
**18.06.2025 Bulletin 2025/25**

(21) Application number: **22954460.6**

(22) Date of filing: **10.08.2022**

(51) International Patent Classification (IPC):
*H04L 5/00* (2006.01)    *H04B 7/06* (2006.01)

(52) Cooperative Patent Classification (CPC):
**H04B 7/06; H04L 5/00**

(86) International application number:
**PCT/CN2022/111585**

(87) International publication number:
**WO 2024/031488 (15.02.2024 Gazette 2024/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **PRECODING INDICATION METHOD FOR NON-CODEBOOK-BASED PUSCH TRANSMISSION**

(57) The present disclosure relates to the field of communications, and provides a precoding indication method and apparatus for non-codebook-based PUSCH transmission. The technical solution of the present application mainly relates to: sending to UE a single DCI carrying SRI domains of a plurality of SRSs, so as to indicate precoding information used when the UE performs STxMP of a non-codebook-based PUSCH under scheduling of the single DCI, wherein each of the plurality of SRI domains is used for indicating one or more SRS resources carrying the precoding information in an associated SRS resource set; and when the UE performs the STxMP, the UE performing non-codebook-based PUSCH transmission in a corresponding beam direction by using the precoding information carried by the one or more SRS resources indicated by each SRI domain. Therefore, the UE can realize uplink simultaneous transmission for multiple TRPs by means of a multi-antenna panel, thereby further improving the uplink system transmission throughput and transmission reliability.

sending a single DCI carrying a plurality of sounding reference signal (SRS) resource indicator (SRI) indication fields to a UE, to indicate precoding information used by the UE during performing non-codebook based PUSCH simultaneous transmission from multiple panels (STxMP) under single DCI scheduling

— 201

FIG. 2

**Description**

<u>TECHNICAL FIELD</u>

The disclosure relates to the field of mobile communication technology, in particular to a method and an apparatus of precoding indication for non-codebook based physical uplink shared channel (PUSCH) transmission.

<u>BACKGROUND</u>

In a communication system, a transmission wavelength becomes smaller as increasing of a frequency band used, a blocking effect caused by obstacles such as human bodies or vehicles will be more significant. Based on this, transmission/reception may be performed through multiple beams from multiple angles using coordinated multiple point technology, thus reducing communication delays.

In related arts, the coordinated multiple point technology may support that a UE (user equipment) under a single DCI (downlink control information) scheduling sends the same information on a PUSCH to different TRPs (transmission/reception points) of a base station in a time division manner through different TOs (transmission occasions) in a time domain.

However, in the related arts, the method has a low requirement on UE capabilities. Each TO only needs to send a PUSCH in one TRP direction and does not support an ability to send beams simultaneously, resulting in a large transmission delay. Therefore, it is required a precoding indication method which may achieve simultaneous uplink transmission for multiple TRPs through multiple antenna panels to further improve uplink system transmission throughput and transmission reliability.

<u>SUMMARY</u>

The present disclosure provides a method and an apparatus of precoding indication for non-codebook based PUSCH transmission, capable of further improving uplink system transmission throughput and transmission reliability.

According to a first aspect, embodiments of the disclosure provide a method of precoding indication for non-codebook based physical uplink shared channel (PUSCH) transmission. The method is performed by a network device, and includes: sending a single downlink control information (DCI) carrying a plurality of sounding reference signal (SRS) resource indicator (SRI) indication fields to a user equipment (UE), to indicate precoding information used by the UE during performing non-codebook based PUSCH simultaneous transmission from multiple panels (STxMP) under single DCI scheduling;

in which, each SRI indication field indicates one or more SRS resources carrying the precoding information in an associated SRS resource set, rendering that the UE, in a case of performing STxMP, performs non-codebook based PUSCH transmission in a corresponding beam direction using the precoding information indicated by each SRI indication field.

Optionally, each SRI indication field indicates an SRI and a transmission rank indication (TRI) according to an SRI preconfiguration table, the SRI preconfiguration table is determined according to a maximum count of uplink transmission layers supported by the PUSCH transmission in the corresponding beam direction and a count of SRS resources in an SRS resource set allocated for the PUSCH transmission in the corresponding beam direction, a count of bits occupied by each SRI indication field is determined based on a count of available SRI combinations in the SRI preconfiguration table.

Optionally, in a case that the same TRI is used for PUSCH transmission in each beam direction of the UE,

one SRI indication field among the plurality of SRI indication fields indicates an SRI and a TRI according to an SRI preconfiguration table, and a count of bits occupied by the one SRI indication field is determined according to a count of available SRI combinations in the SRI preconfiguration table; and

other SRI indication fields among the plurality of SRI indication fields respectively indicate SRIs according to an SRI sub-table, in which, the SRI sub-table is determined from the SRI preconfiguration table according to the TRI, and a count of bits occupied by each SRI indication field in the other SRI indication fields is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of a maximum count of uplink transmission layers supported by the PUSCH transmission in the corresponding beam direction and a count of SRS resources in an SRS resource set allocated for the PUSCH transmission in the corresponding beam direction;

the SRI preconfiguration table is determined based on the maximum count of uplink transmission layers supported by the PUSCH transmission in the corresponding beam direction and the count of SRS resources in the SRS resource set allocated for the PUSCH transmission in the corresponding beam direction.

Optionally, the method further includes:

obtaining rank indication information, in which, the rank indication information indicates a TRI used for PUSCH transmission in each beam direction of the UE; and

in which, each SRI indication field indicates an SRI according to an SRI sub-table, the SRI sub-table is determined from an SRI preconfiguration table according to the TRI used for the PUSCH transmission in the corresponding beam direction, and the SRI preconfiguration table is determined based on a maximum count of uplink transmission layers supported by the PUSCH transmission in the corresponding beam direction and a count of SRS resources in an SRS resource set allocated for the PUSCH transmission in the corresponding beam direction, and a count of bits occupied by each SRI indication field is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of the maximum count of uplink transmission layers supported by the PUSCH transmission in the corresponding beam direction and the count of SRS resources in the SRS resource set allocated for the PUSCH transmission in the corresponding beam direction.

Optionally, for a specific TRI, a count of codepoints in the SRI sub-table is 2^M, in which, K codepoints respectively represent K SRI values corresponding to the specific TRI in the corresponding SRI preconfiguration table, and the remaining (2^M-K) codepoints are reserved values, where M is $\lceil \log_2(N_{max}) \rceil$, $\lceil \rceil$ denotes rounding up.

Optionally, the rank indication information is obtained according to any one of:

a demodulation reference signal (DMRS) field of the single DCI;
a reserved codepoint or an extended codepoint of any indication field in the single DCI;
a new added indication field in the single DCI; or
a count of codewords supported by the single DCI.

Optionally, an association between the SRI indication field and the SRS resource set is predefined or indicated by an SRS resource set indication field in the single DCI.

Optionally, a correspondence between the beam direction and the PUSCH transmission is determined by any one of:

an antenna panel, a transmission and reception point (TRP), transmission control information (TCI), a PUSCH transmission occasion (TO), or an SRS resource set.

According to a second aspect, embodiments of the disclosure provide a method of precoding indication for non-codebook based physical uplink shared channel (PUSCH) transmission. The method is performed by a UE, and includes: receiving a single downlink control information (DCI) carrying a plurality of sounding reference signal (SRS) resource indicator (SRI) indication fields, in which, the single DCI indicates precoding information used by the UE during performing non-codebook based PUSCH simultaneous transmission from multiple panels (STxMP) under single DCI scheduling, wherein each SRI indication field of the plurality of SRI indication fields indicates one or more SRS resources carrying the precoding information in an associated SRS resource set, rendering that the UE, in a case of performing STxMP, performs non-codebook based PUSCH transmission in a corresponding beam direction using the precoding information carried by the one or more SRS resources indicated by each SRI indication field; and
performing the non-codebook based PUSCH transmission based on the single DCI.

Optionally, performing the non-codebook based PUSCH transmission based on the single DCI includes:

determining an SRS resource used for PUSCH transmission in each beam direction according to an SRI and a transmission rank indication (TRI) indicated by each SRI indication field and an SRI preconfiguration table, in which, the SRI preconfiguration table is determined according to a maximum count of uplink transmission layers supported by the PUSCH transmission in the corresponding beam direction and a count of SRS resources in an SRS resource set allocated for the PUSCH transmission in the corresponding beam direction, a count of bits occupied by each SRI indication field is determined based on a count of available SRI combinations in the SRI preconfiguration table; and
performing the non-codebook based PUSCH transmission using the precoding information carried by the corresponding SRS resource in each beam direction.

Optionally, in a case that the same TRI is used for PUSCH transmission in each beam direction of the UE, performing the non-codebook based PUSCH transmission based on the single DCI includes:

determining an SRS resource used for the PUSCH transmission in the corresponding beam direction according to an SRI and a TRI indicated by one SRI indication field among the plurality of SRI indication fields and an SRI preconfiguration table, in which, a count of bits occupied by the one SRI indication field is determined according to a count of available SRI combinations in the SRI preconfiguration table; and

determining an SRS resource used for the PUSCH transmission in each corresponding beam direction according to SRIs respectively indicated by other SRI indication fields among the plurality of SRI indication fields and an SRI sub-table, in which, the SRI sub-table is determined from the SRI preconfiguration table according to the TRI, and a count of bits occupied by each SRI indication field in the other SRI indication fields is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of a maximum count of uplink transmission layers supported by the PUSCH transmission in the corresponding beam direction and a count of SRS resources in an SRS resource set allocated for the PUSCH transmission in the corresponding beam direction; and

performing the non-codebook based PUSCH transmission using the precoding information carried by the corresponding SRS resource in each beam direction;

in which, the SRI preconfiguration table is determined based on the maximum count of uplink transmission layers supported by the PUSCH transmission in the corresponding beam direction and the count of SRS resources in the SRS resource set allocated for the PUSCH transmission in the corresponding beam direction.

Optionally, performing the non-codebook based PUSCH transmission based on the single DCI comprises:

determining an SRS resource used for PUSCH transmission in each beam direction according to an SRI indicated by each SRI indication field and an SRI sub-table, in which, the SRI sub-table is determined from an SRI pre-configuration table according to a TRI used for the PUSCH transmission in the corresponding beam direction, and the SRI preconfiguration table is determined based on a maximum count of uplink transmission layers supported by the PUSCH transmission in the corresponding beam direction and a count of SRS resources in an SRS resource set allocated for the PUSCH transmission in the corresponding beam direction, and a count of bits occupied by each SRI indication field is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of the maximum count of uplink transmission layers supported by the PUSCH transmission in the corresponding beam direction and a count of SRS resources in the SRS resource set allocated for the PUSCH transmission in the corresponding beam direction; and

performing the non-codebook based PUSCH transmission using the precoding information carried by the corresponding SRS resource in each beam direction.

Optionally, for a specific TRI, a count of codepoints in the SRI sub-table is 2^M, in which, K codepoints respectively represent K SRI values corresponding to the specific TRI in the corresponding SRI preconfiguration table, and the remaining (2^M-K) codepoints are reserved values, where M is $\lceil log_2(N_{max}) \rceil$, $\lceil \ \rceil$ denotes rounding up.

Optionally, an association between the SRI indication field and the SRS resource set is predefined or indicated by an SRS resource set indication field in the single DCI.

Optionally, a correspondence between the beam direction and the PUSCH transmission is determined by any one of:

an antenna panel, a transmission and reception point (TRP), transmission control information (TCI), a PUSCH transmission occasion (TO), or an SRS resource set.

According to a third aspect, embodiments of the disclosure provide an apparatus of precoding indication for non-codebook based PUSCH transmission. The apparatus is provided in a network device, and includes:

a transceiver module, configured to send a single downlink control information (DCI) carrying a plurality of sounding reference signal (SRS) resource indicator (SRI) indication fields to a user equipment (UE), to indicate precoding information used by the UE during performing non-codebook based PUSCH simultaneous transmission from multiple panels (STxMP) under single DCI scheduling;

in which, each SRI indication field indicates one or more SRS resources carrying the precoding information in an associated SRS resource set, rendering that the UE, in a case of performing STxMP, performs non-codebook based PUSCH transmission in a corresponding beam direction using the precoding information indicated by each SRI indication field.

According to a fourth aspect, embodiments of the disclosure provide an apparatus of precoding indication for non-codebook based PUSCH transmission. The apparatus is provided in a UE, and includes:

a transceiver module, configured to receive a single downlink control information (DCI) carrying a plurality of sounding reference signal (SRS) resource indicator (SRI) indication fields, in which, the single DCI indicates precoding information used by the UE during performing non-codebook based PUSCH simultaneous transmission from multiple panels (STxMP) under single DCI scheduling, wherein each SRI indication field of the plurality of SRI indication field indicates one or more SRS resources carrying the precoding information in an associated SRS resource set, rendering that the UE, in a case of performing STxMP, performs non-codebook based PUSCH transmission in a corresponding beam direction using the precoding information carried by one or more SRS resources indicated by each SRI indication field; and

a processing module, configured to perform the non-codebook based PUSCH transmission based on the single DCI.

According to a fifth aspect, embodiments of the disclosure provide a communication device. The communication device includes: a processor. When the processor calls a computer program stored in a memory, the method described in the first aspect above is implemented.

According to a sixth aspect, embodiments of the disclosure provide a communication device. The communication device includes: a processor. When the processor calls a computer program stored in a memory, the method described in the second aspect above is implemented.

According to a seventh aspect, embodiments of the disclosure provide a communication device. The communication device includes: a processor and a memory having a computer program stored thereon. The processor is configured to execute the computer program stored in the memory, causing the communication device to execute the method described in the first aspect above.

According to an eighth aspect, embodiments of the disclosure provide a communication device. The communication device includes: a processor and a memory having a computer program stored thereon. The processor is configured to execute the computer program stored in the memory, causing the communication device to execute the method described in the second aspect above.

According to a ninth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in the first aspect above.

According to a tenth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in the second aspect above.

According to an eleventh aspect, embodiments of the disclosure provide a communication system. The system includes the communication device of the sixth aspect to the communication device of the tenth aspect.

According to a twelfth aspect of embodiments of the disclosure, a computer-readable storage medium is provided. The computer-readable storage medium is configured to store instructions used by the above network device. When the instructions are executed, the terminal device is caused to implement the method of any one aspect of the first aspect to the second aspect.

According to a thirteenth aspect of the disclosure, embodiments of the disclosure provide a communication system. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a fourteenth aspect of the disclosure, a computer program product including a computer program is provided. The computer program, when run by a computer, causes the computer to implement the method of any one aspect of the first aspect to the second aspect.

According to a fifteenth aspect of the disclosure, a chip system is provided. The chip system includes at least one processor and an interface for supporting the network device in realizing functions involved in the method of any one aspect of the first aspect to the second aspect, e.g., determining or processing at least one of data or information involved in the method described above. In a possible design, the chip system further includes a memory. The memory is configured to store necessary computer programs and data of source and secondary nodes. The chip system may consist of chips or may include a chip and other discrete devices.

According to a sixteenth aspect of the disclosure, a computer program is provided. The computer program, when running on a computer, causes the computer to implement the method of any one aspect of the first aspect to the second aspect.

Embodiments of the present disclosure provide the method and the apparatus of precoding indication for non-codebook based PUSCH transmission. According to the method of precoding indication for non-codebook based PUSCH transmission, the single DCI carrying the plurality of SRS resource indicator (SRI) indication fields is sent to the UE, to indicate the precoding information used by the UE during performing the non-codebook based PUSCH STxMP under single DCI scheduling. Each SRI indication field among the plurality of SRI indication fields indicates one or more SRS resources carrying the precoding information in the associated SRS resource set, rendering that the UE, in a case of performing STxMP, performs the non-codebook based PUSCH transmission in the corresponding beam direction using the precoding information carried by one or more SRS resources indicated by each SRI indication field. Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same. This may allow the UE to flexibly implement simultaneous uplink transmission for multiple TRPs through multiple antenna panels, which may further improve uplink system transmission throughput and transmission reliability.

Additional aspects and advantages of the disclosure will be set forth in part in the following description, and in part will be obvious from the following description, or may be learned by practice of the present disclosure.

## BRIEF DESCRIPTION OF THE DRAWINGS

The above-mentioned and/or additional aspects and advantages of the present disclosure will be apparent and readily understood from the following description of embodiments taken in combination with the accompanying drawings, in which:

FIG. 1 is a structural diagram of a communication system provided by an embodiment of the disclosure.
FIG. 2 is a flowchart of a method of precoding indication for non-codebook based PUSCH transmission according to an embodiment of the present disclosure.
FIG. 3 is a flowchart of a method of precoding indication for non-codebook based PUSCH transmission according to an embodiment of the present disclosure.
FIG. 4 is a flowchart of a method of precoding indication for non-codebook based PUSCH transmission according to an embodiment of the present disclosure.
FIG. 5 is a flowchart of a method of precoding indication for non-codebook based PUSCH transmission according to an embodiment of the present disclosure.
FIG. 6 is a flowchart of a method of precoding indication for non-codebook based PUSCH transmission according to an embodiment of the present disclosure.
FIG. 7 is a flowchart of a method of precoding indication for non-codebook based PUSCH transmission according to an embodiment of the present disclosure.
FIG. 8 is a flowchart of a method of precoding indication for non-codebook based PUSCH transmission according to an embodiment of the present disclosure.
FIG. 9 is a flowchart of a method of precoding indication for non-codebook based PUSCH transmission according to an embodiment of the present disclosure.
FIG. 10 is a block diagram of an apparatus of precoding indication for non-codebook based PUSCH transmission according to an embodiment of the present disclosure.
FIG. 11 is a block diagram of an apparatus of precoding indication for non-codebook based PUSCH transmission according to an embodiment of the present disclosure.
FIG. 12 is a schematic diagram of a communication device provided by an embodiment of the disclosure.
FIG. 13 is a schematic diagram of a chip according to an embodiment of the disclosure.

## DETAILED DESCRIPTION

Reference will be made in detail to embodiments of the present disclosure. Examples of the embodiments of the present disclosure will be shown in drawings, in which the same or similar elements and elements having the same or similar functions are denoted by like reference numerals throughout the descriptions. Embodiments described herein according to drawings are illustrative and intended to explain the present disclosure, not construed to limit the present disclosure.

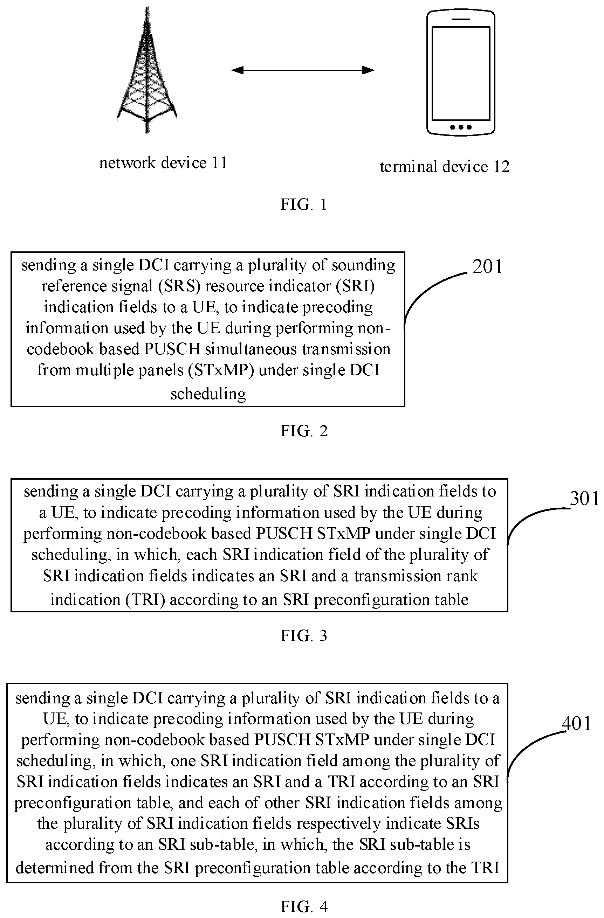

Please refer to FIG. 1, FIG. 1 is a structural diagram of a communication system provided by an embodiment of the disclosure. The communication system may include, but is not limited to, one network device and one terminal device. The number and the form of devices illustrated in FIG. 1 are only for examples and do not constitute a limitation on the embodiments of the disclosure. The communication system may include two or more network devices and two or more terminal devices in practical applications. The communication system as illustrated in FIG. 1 may include, for example, a network device 11 and a terminal device 12.

It is noteworthy that the technical solutions of the embodiments of the disclosure can be applied to various communication systems, such as, a long term evolution (LTE) system, a 5th generation (5G) mobile communication system, a 5G NR (new radio) system, or other future new mobile communication systems, etc.

The network device 11 in embodiments of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal device 12 in embodiments of the disclosure is an entity on a user side for receiving or transmitting signals, such as a cellular phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in embodiments of the present disclosure.

In R18, transmission solutions that may be supported for uplink simultaneous transmission are that, for uplink synchronous transmission of multi-antenna panel/reception and transmission point (TRP)/transmission configuration indication (TCI), coordinated transmission of one transport block (TB) of a single DCI (S-DCI) based PUSCH transmission includes a plurality of different transmission solutions. Each transmission solution is briefly explained below.

One solution is a space division multiplexing (SDM) solution: one TB of the PUSCH is sent, on the same time-frequency resource, towards two different TRPs via respective corresponding demodulation reference signal (DMRS) ports or port combinations allocated on different panels, respectively, and different panels/TRPs/transmission occasions (TOs) are associated with different TCI states respectively, namely, associated with different beams. On this basis, the SDM solution is specifically divided into two solutions including SDM-A and SDM-B. In the SDM-A solution, different parts of one TB of the PUSCH are sent, on the same time-frequency resource, towards two different TRPs via respective corresponding DMRS ports or port combinations allocated on different panels, respectively, and different panels/TRPs/TOs are associated with different TCI states respectively. In the SDM-B solution, repetitions of the same TB of the PUSCH corresponding to different RV versions are sent, on the same time-frequency resource, towards two different TRPs via respective corresponding DMRS ports or port combinations allocated on different panels respectively, and different panels/TRPs/TOs are associated with different TCI states respectively.

Another solution is a frequency division multiplexing (FDM) solution: one TB of the PUSCH is sent, on non-overlapping frequency domain resources for the same time domain resource, towards two different TRPs via the same DMRS port or port combination allocated on different panels, and different panels/TRPs/TOs are associated with different TCI states respectively. On this basis, the FDM solution is specifically divided into two solutions including FDM-A and FDM-B. In the FDM-A solution, different parts of one TB of the PUSCH are sent, on the non-overlapping frequency domain resources for the same time domain resource, towards two different TRPs via the same DMRS port or port combination allocated on different panels respectively, and different panels/TRPs/TOs are associated with different TCI states respectively. In the FDM-B solution, repetitions of the same TB of the PUSCH corresponding to different RV versions are sent, on the non-overlapping frequency domain resources for the same time domain resource, towards two different TRPs via the same DMRS port or port combination allocated on different panels respectively, and different panels/TRPs/TOs are associated with different TCI states respectively.

Another solution is a spatial multiplexing (SFN) solution: one TB of the PUSCH is sent, on the same time-frequency resource, towards two different TRPs via the same DMRS port or port combination allocated on different panels respectively, and different panels/TRPs/TOs are associated with different TCI states respectively.

Multi-panel based uplink PUSCH simultaneous transmission generally supports one or more of the above solutions.

However, in the related arts, the multi-panel based uplink PUSCH simultaneous transmission requires that an SRS resource set allocated for PUSCH transmission on each panel/TRP/TO includes the same count of SRS resources. A maximum count of transmission layers supported by the PUSCH transmission on each panel/TRP/TO is the same, and a transmission rank actually used for the PUSCH transmission on each panel/TRP/TO is the same. Therefore, the transmission solution in the related arts cannot flexibly support multi-panel non-codebook based uplink PUSCH simultaneous transmission.

In view of this, the present disclosure provides a method and an apparatus of precoding indication for non-codebook based PUSCH transmission, which can be applied to a situation that respective counts of SRS resources included in the SRS resource set allocated for the PUSCH transmission on respective panels/TRPs/TOs are not completely the same, and respective maximum counts of uplink transmission layers supported by the PUSCH transmission on respective panels/TRPs/TOs are not completely the same. This may allow the UE to flexibly implement simultaneous uplink transmission for multiple TRPs through multiple antenna panels, which may further improve uplink system transmission throughput and transmission reliability.

FIG. 2 is a flowchart of a method of precoding indication for non-codebook based PUSCH transmission according to an embodiment of the present disclosure. As illustrated in FIG. 2, the method is performed by a network device, and may include the following step.

At step S201, a single DCI carrying a plurality of sounding reference signal (SRS) resource indicator (SRI) indication fields is sent to a UE, to indicate precoding information used by the UE during performing non-codebook based PUSCH simultaneous transmission from multiple panels (STxMP) under single DCI scheduling.

Each SRI indication field among the plurality of SRI indication fields indicates one or more SRS resources carrying the precoding information in an associated SRS resource set, rendering that the UE, in a case of performing STxMP, performs non-codebook based PUSCH transmission in a corresponding beam direction using the precoding information indicated by each SRI indication field. Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same.

In an embodiment of the present disclosure, the SRI indication field is used to carry an index, and the index is used to indicate one or more SRS resources selected by the network device from the plurality of SRS resources configured for the UE.

For example, in an embodiment of the present disclosure, in a non-codebook based uplink transmission mode, the network device sends the single DCI carrying the plurality of SRI indication fields to the UE, to configure for the UE the SRS resources used for the PUSCH transmission in each beam direction.

It should be noted that the respective maximum counts of uplink transmission layers supported by the PUSCH transmission in the respective beam directions of the UE and the respective counts of SRS resources in the SRS resource set allocated for the PUSCH transmission in the respective beam directions may be configured through signaling. The maximum counts of uplink transmission layers supported by the PUSCH transmission in different beam directions of the UE may be different, the counts of SRS resources in the SRS resource set allocated for the PUSCH transmission in different beam directions may also be different.

In some embodiments, an association between the SRI indication field and the SRS resource set may be predefined or indicated by an SRS resource set indication field in the single DCI.

Assumed that TCI beam indication information carried in the single DCI sent by the network device indicates three beams (corresponding to a first beam direction, a second beam direction, and a third beam direction respectively), and transmission configuration information carried in the single DCI includes three SRI indication fields (that is, a first SRI indication field, a second SRI indication field and a third SRI indication field, respectively). In an example, the network device and the UE may predefine that, the first SRI indication field instructs to select SRS resources from an SRS resource set allocated for PUSCH transmission in the first beam direction, that is, the first SRI indication field indicates the SRS resources used for the PUSCH transmission in the first beam direction, and the second SRI indication field instructs to select SRS resources from an SRS resource set allocated for PUSCH transmission in the second beam direction, and the third SRI indication field instructs to select SRS resources from an SRS resource set allocated for PUSCH transmission in the third beam direction. In another example, the network device may indicates through the SRS resource set indication field in the single DCI. For example, the SRS resource set indication field is newly added to the single DCI. The SRS resource set indication field indicates that the first SRI indication field instructs to select the SRS resources from the SRS resource set allocated for the PUSCH transmission in the first beam direction, and the second SRI indication field instructs to select the SRS resources from the SRS resource set allocated for the PUSCH transmission in the second beam direction, and the third SRI indication field instructs to select SRS resources from the SRS resource set allocated for the PUSCH transmission in the third beam direction.

In some embodiments, a correspondence between the beam direction and the PUSCH transmission is determined by any one of:

an antenna panel, a transmission and reception point (TRP), transmission control information (TCI), a PUSCH transmission occasion (TO), or an SRS resource set.

That is, the PUSCH transmission may be associated with the antenna panel/TRP/PUSCH TO/SRS resource set.

For example, in an embodiment of the present disclosure, assumed that the UE performs the PUSCH transmission in two beam directions through two antenna panels. Antenna panel 1 sends beam 1 to a northwest direction, and antenna panel 2 sends beam 2 to a northeast direction. The beam 1 may correspond to a channel PUSCH1, and the beam 2 may correspond to a channel PUSCH2.

According to the method of precoding indication for non-codebook based PUSCH transmission, the single DCI carrying the plurality of SRI indication fields is sent to the UE, to indicate the precoding information used by the UE during performing the non-codebook based PUSCH STxMP under single DCI scheduling. The UE performs the non-codebook based PUSCH transmission in the corresponding beam direction using the precoding information carried by one or more SRS resources indicated by each SRI indication field. The respective counts of SRS resources in the SRS resource set allocated for the PUSCH transmission in the respective beam directions of the UE are not completely the same, and the respective maximum counts of uplink transmission layers supported by the PUSCH transmission in the respective beam directions are not completely the same. This may allow the UE to flexibly implement simultaneous uplink transmission for multiple TRPs through multiple antenna panels, which may further improve uplink system transmission throughput and transmission reliability.

FIG. 3 is a flowchart of a method of precoding indication for non-codebook based PUSCH transmission according to an embodiment of the present disclosure. As illustrated in FIG. 3, the method is performed by a network device, and may include the following step.

At step S301, a single DCI carrying a plurality of SRI indication fields is sent to a UE, to indicate precoding information used by the UE during performing non-codebook based PUSCH STxMP under single DCI scheduling, in which, each SRI indication field of the plurality of SRI indication fields indicates an SRI and a transmission rank indication (TRI) according to an SRI preconfiguration table.

Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same. The SRI preconfiguration table is determined according to a maximum count of uplink transmission layers supported by the PUSCH transmission in the corresponding beam direction and a count of SRS resources in an SRS resource set allocated for the PUSCH transmission in the corresponding beam direction, a count of bits occupied by each SRI indication field is determined based on a count of available SRI combinations in the SRI preconfiguration table.

In an embodiment, the single DCI sent by the network device to the UE carries the plurality of SRI indication fields. The non-codebook based PUSCH transmission in each beam direction corresponds to one SRI indication field, that is, one SRI indication field may indicate the SRS resources of the non-codebook based PUSCH transmission in one beam direction. The network equipment may determine the maximum count of uplink transmission layers supported by the PUSCH transmission in each beam direction and the count of SRS resources in the SRS resource set allocated for the PUSCH transmission in each beam direction, and then determine the SRI preconfiguration table used for the PUSCH transmission in each beam direction. Each SRI indication field carried in the DCI sent by the network device to the UE may carry an index. The index is used to simultaneously indicate the SRI and the TRI according to the SRI preconfiguration table. The count of bits occupied by each SRI indication field is determined according to the count of available SRI combinations in the corresponding SRI preconfiguration table.

In an example, for a PUSCH transmission associated with the antenna panel/TRP/PUSCH TO/TCI beam direction, in a case that the network device determines that the maximum count of uplink transmission layers supported by the PUSCH transmission in the beam direction is 4 ($L_{max}$=4), and the count of SRS resources in the SRS resource set allocated for the PUSCH transmission in the beam direction is 3 ($N_{SRS}$=3), the network device may determine that the SRI preconfiguration table for the PUSCH transmission in the beam direction is a table corresponding to black bold texts in Table 1. The SRI indication field used to indicate the SRS resources for the PUSCH transmission in the beam direction may indicate the SRI and the TRI according to this table (implicitly indicated by the count of SRIs). For example, if the SRI indication field carries index 1, it indicates TRI =1, SRI=1, if the SRI indication field carries index 6, it indicates TRI=3, SRI=0, 1, 2. In this table, the count of available SRI combinations is 7, then the count of bits occupied by the SRI indication field may be determined as $\lceil \log_2 7 \rceil$=3, where $\lceil \ \rceil$ denotes rounding up.

| index | SRI(s), $N_{SRS}=2$ | index | SRI(s), $N_{SRS}=3$ | index | SRI(s), $N_{SRS}=4$ |
|---|---|---|---|---|---|
| 0 | 0 | **0** | **0** | 0 | 0 |
| 1 | 1 | **1** | **1** | 1 | 1 |
| 2 | 0,1 | **2** | **2** | 2 | 2 |
| 3 | reserved | **3** | **0,1** | 3 | 3 |
|   |   | **4** | **0,2** | 4 | 0,1 |
|   |   | **5** | **1,2** | 5 | 0,2 |
|   |   | **6** | **0,1,2** | 6 | 0,3 |
|   |   | **7** | **reserved** | 7 | 1,2 |
|   |   |   |   | 8 | 1,3 |
|   |   |   |   | 9 | 2,3 |
|   |   |   |   | 10 | 0,1,2 |
|   |   |   |   | 11 | 0,1,3 |
|   |   |   |   | 12 | 0,2,3 |
|   |   |   |   | 13 | 1,2,3 |
|   |   |   |   | 14 | 0,1,2,3 |
|   |   |   |   | 15 | reserved |

Table 1

In another example, for a PUSCH transmission associated with one antenna panel/TRP/PUSCH TO/TCI beam direction, in a case that the network device determines that the maximum count of uplink transmission layers supported by the PUSCH transmission in the beam direction is 3 ($L_{max}=3$), and the count of SRS resources in the SRS resource set allocated for the PUSCH transmission in the beam direction is 4 ($N_{SRS}=4$), the network device may determine that the SRI preconfiguration table for the PUSCH transmission in the beam direction is a table corresponding to black bold texts in Table 2. The SRI indication field used to indicate the SRS resources for the PUSCH transmission in the beam direction may indicate the SRI and the TRI according to this table. For example, if the SRI indication field carries index 1, it indicates TRI =1, SRI=1, if the SRI indication field carries index 6, it indicates TRI=2, SRI=1, 2. In this table, the count of available SRI combinations is 14, then the count of bits occupied by the SRI indication field may be determined as $\lceil \log_2 14 \rceil =4$, where $\lceil$ $\rceil$ denotes rounding up.

| index | SRI(s), $N_{SRS}=2$ | index | SRI(s), $N_{SRS}=3$ | index | SRI(s), $N_{SRS}=4$ |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

Table 2

According to the method of precoding indication for non-codebook based PUSCH transmission, the single DCI carrying the plurality of SRI indication fields is sent to the UE, to indicate the precoding information used by the UE during performing the non-codebook based PUSCH STxMP under the single DCI scheduling. The respective counts of SRS resources in the SRS resource set allocated for the PUSCH transmission in the respective beam directions of the UE are not completely the same, and the respective maximum counts of uplink transmission layers supported by the PUSCH transmission in the respective beam directions are not completely the same, and each SRI indication field indicates both the SRI and the TRI. This may allow the UE to flexibly implement simultaneous uplink transmission for multiple TRPs through multiple antenna panels, which may further improve uplink system transmission throughput and transmission reliability.

FIG. 4 is a flowchart of a method of precoding indication for non-codebook based PUSCH transmission according to an embodiment of the present disclosure. As illustrated in FIG. 4, the method is performed by a network device, and may include the following step.

At step S401, a single DCI carrying a plurality of SRI indication fields is sent to a UE, to indicate precoding information used by the UE during performing non-codebook based PUSCH STxMP under single DCI scheduling, in which, one SRI indication field among the plurality of SRI indication fields indicates an SRI and a TRI according to an SRI preconfiguration table, and each of other SRI indication fields among the plurality of SRI indication fields respectively indicate SRIs according to an SRI sub-table, in which, the SRI sub-table is determined from the SRI preconfiguration table according to the TRI.

Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same, and the same TRI is used for PUSCH transmission in each beam direction of the UE. A count of bits occupied by the one SRI indication field for indicating the SRI and the TRI is determined according to a count of available SRI combinations in the SRI preconfiguration table. A count of bits occupied by each SRI indication field in the other SRI indication fields for indicating the SRIs is determined according to a maximum value $N_{max}$ of a count of available SRI combinations corresponding to each available TRI in the corresponding SRI preconfiguration table. Each available TRI is determined a less one of a maximum count of uplink transmission layers supported by the PUSCH transmission in the corresponding beam direction and a count of SRS resources in an SRS resource set allocated for the PUSCH transmission in the corresponding beam direction.

In an embodiment, the single DCI sent by the network device to the UE carries the plurality of SRI indication fields. The non-codebook based PUSCH transmission in each beam direction corresponds to one SRI indication field, that is, one SRI indication field may indicate the SRS resources of the non-codebook based PUSCH transmission in one beam direction. The network equipment may determine the maximum count of uplink transmission layers supported by the PUSCH transmission in each beam direction and the count of SRS resources in the SRS resource set allocated for the PUSCH transmission in each beam direction, and then determine the SRI preconfiguration table used for the PUSCH transmission in each beam direction. One SRI indication field SRI indication field carried in the DCI sent by the network device to the UE may carry an index for indicating both the SRI and the TRI according to the SRI preconfiguration table, and each SRI indication field of the other SRI indication fields may carry an index for indicating the SRI according to the SRI sub-table determined from the SRI preconfiguration table. The count of bits occupied by the SRI indication field indicating the SRI and the TRI is determined according to the count of available SRI combinations in the corresponding SRI preconfiguration table, and the count of bits occupied by the SRI indication field for indicating the SRI only is determined according to a maximum count of available SRI combinations corresponding to each available TRI in the corresponding SRI preconfiguration table.

In an example, for a first PUSCH transmission associated with one antenna panel/TRP/PUSCH TO/TCI beam direction, in a case that the network device determines that the maximum count of uplink transmission layers supported by the PUSCH transmission in the beam direction is 4 ($L_{max}$=4), and the count of SRS resources in the SRS resource set allocated for the PUSCH transmission in the beam direction is 3 ($N_{SRS}$=3), the network device may determine that the SRI preconfiguration table for the PUSCH transmission in the beam direction is a table corresponding to black bold texts in Table 1. The SRI indication field used to indicate the SRS resources for the PUSCH transmission in the beam direction may indicate the SRI and the TRI according to this table (implicitly indicated by the count of SRIs). For example, if the SRI indication field carries index 1, it indicates TRI =1, SRI=1, if the SRI indication field carries index 6, it indicates TRI=3, SRI=0, 1, 2. In this table, the count of available SRI combinations is 7, then the count of bits occupied by the SRI indication field may be determined as [log27]=3, where ⌈ ⌉ denotes rounding up.

In a case that, for the first PUSCH transmission, the index carried in the SRI indication field is 6, it can be seen that the TRI used for the PUSCH transmission in each beam direction of the UE is 3. Then for a second PUSCH transmission associated with another antenna panel/TRP/PUSCH TO/TCI beam direction, in a case that the network device determines that the maximum count of uplink transmission layers supported by the PUSCH transmission in the beam direction is 3 ($L_{max}$ =3), and the count of SRS resources in the SRS resource set allocated for the PUSCH transmission in the beam direction is 4 ($N_{SRS}$=4), the network device may determine that the SRI preconfiguration table for the PUSCH transmission in the beam direction is a table corresponding to black bold texts in Table 2. In addition, according to a value 3 of the TRI used for the PUSCH transmission in the beam direction, the network device may determine that the corresponding SRI sub-table is a subset with the value of TRI being 3 in the table, that is, the corresponding SRI sub-table is a subset of TRI =3 (3 SRIs) in the table, and indexes in the SRI sub-table are reordered, as shown in Table 3. The SRI indication field used to indicate the SRS resource for the PUSCH transmission in the beam direction may indicate the SRI according to the SRI sub-table. For example, in Table 3 determined according to TRI=3, if the SRI indication field carries index 1, then it indicates SRI=0, 1, 2. If the SRI indication field carries index 2, it indicates SRI=0, 2, 3.

In the determined SRI preconfiguration table, the available TRI is greater than or equal to 1 and less than or equal to the less one of $L_{max}$ and $N_{SRS}$ (in this example, min{$L_{max}$,$N_{SRS}$}=3), namely, 1, 2, 3. When TRI=1, the count of available SRI combinations is 3. When TRI=2, the count of available SRI combinations is 6. When TRI=3, the count of available SRI combinations is 4. Then the count of bits occupied by the SRI indication field may be determined as $\lceil \log_2 6 \rceil = 3$ , where ⌈⌉ denotes rounding up.

Table 3

| index | SRI(s), $N_{SRS}$ = 4 |
|-------|------------------------|
| 0     | 0,1,2                  |
| 1     | 0,1,3                  |
| 2     | 0,2,3                  |
| 3     | 1,2,3                  |
| 4-7   | reserved               |

As shown above, although the available SRI combinations in the SRI sub-table determined based on TRI=3 only include four kinds of {0,1,2}, {0,1,3}, {0,2,3}, {1, 2,3}, but the count of codepoints of the SRI sub-table is determined based on the maximum number of available SRI combinations corresponding to all available TRIs in the corresponding codebook preconfiguration table, that is, determined based on the count 6 of available SRI combinations corresponding to TRI=2. Therefore, the count of codepoints in the SRI sub-table is 8 bits.

For TRI=3, 4 codepoints respectively represent values of the SRIs with TRI=3 in the corresponding codebook preconfiguration table, and the remaining 4 bits are reserved bits, as shown in Table 3 above.

For TRI=2, 6 codepoints respectively represent values of the SRIs with TRI=2 in the corresponding codebook preconfiguration table, and the remaining 2 bits are reserved bits, as shown in Table 4.

Table 4

| index | SRI(s), $N_{SRS} = 4$ |
|---|---|
| 0 | 0,1 |
| 1 | 0,2 |
| 2 | 0,3 |
| 3 | 1,2 |
| 4 | 1,3 |
| 5 | 2,3 |
| 6-7 | reserved |

In some embodiments, an association between the SRI indication field and the SRS resource set may be predefined or indicated by an SRS resource set indication field in the single DCI.

Assumed that TCI beam indication information carried in the single DCI sent by the network device indicates three beams (corresponding to a first beam direction, a second beam direction, and a third beam direction respectively), and transmission configuration information carried in the single DCI includes three SRI indication fields (that is, a first SRI indication field, a second SRI indication field and a third SRI indication field, respectively). In an example, the network device and the UE may predefine that, the first SRI indication field instructs to select SRS resources from an SRS resource set allocated for PUSCH transmission in the first beam direction, that is, the first SRI indication field indicates the SRS resources used for the PUSCH transmission in the first beam direction, and the second SRI indication field instructs to select SRS resources from an SRS resource set allocated for PUSCH transmission in the second beam direction, and the third SRI indication field instructs to select SRS resources from an SRS resource set allocated for PUSCH transmission in the third beam direction. In another example, the network device may indicates through the SRS resource set indication field in the single DCI. For example, the SRS resource set indication field is newly added to the single DCI. The SRS resource set indication field indicates that the first SRI indication field instructs to select the SRS resources from the SRS resource set allocated for the PUSCH transmission in the first beam direction, and the second SRI indication field instructs to select the SRS resources from the SRS resource set allocated for the PUSCH transmission in the second beam direction, and the third SRI indication field instructs to select SRS resources from the SRS resource set allocated for the PUSCH transmission in the third beam direction.

According to the method of precoding indication for non-codebook based PUSCH transmission, the single DCI carrying the plurality of SRI indication fields is sent to the UE, to indicate the precoding information used by the UE during performing the non-codebook based PUSCH STxMP under single DCI scheduling. The respective counts of SRS resources in the SRS resource set allocated for the PUSCH transmission in the respective beam directions of the UE are not completely the same, and the respective maximum counts of uplink transmiss ion layers supported by the PUSCH transmission in the respective beam directions are not completely the same. One SRI indication field among the plurality of SRI indication fields indicates the SRI and the TRI according to the SRI preconfiguration table, and other SRI indication fields indicate SRIs according to an SRI sub-table. Therefore, it may allow the UE to flexibly implement simultaneous uplink transmission for multiple TRPs through multiple antenna panels, which may further improve uplink system transmission throughput and transmission reliability.

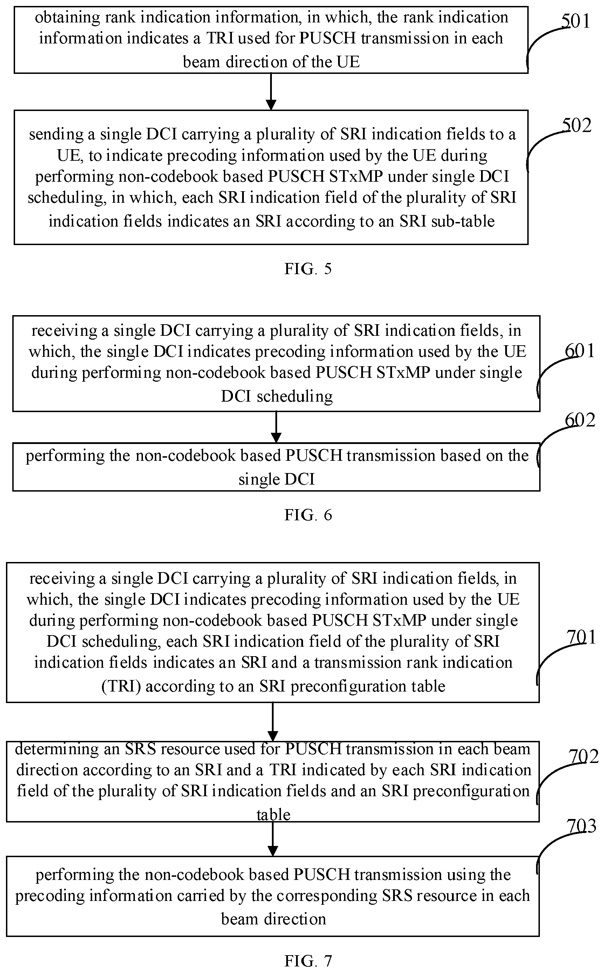

FIG. 5 is a flowchart of a method of precoding indication for non-codebook based PUSCH transmission according to an embodiment of the present disclosure. As illustrated in FIG. 5, the method is performed by a network device, and may include the following step.

At step 501, rank indication information is obtained, in which, the rank indication information indicates a TRI used for PUSCH transmission in each beam direction of the UE.

In some embodiments, the rank indication information is obtained according to any one of: a demodulation reference signal (DMRS) field of the single DCI; a reserved codepoint or an extended codepoint of any indication field in the single DCI; a newly added indication field in the single DCI; or a count of code words supported by the single DCI.

The DMRS field of the DCI may indicate DMRS port information used for PUSCH transmission in each beam direction. For example, the indicated DMRS port is {0,1} and a corresponding transmission solution is FDM or SFN transmission, then the DMRS port corresponding to the PUSCH transmission in each beam direction use a port {0,1}, that is, TRI is 2. For example, in a case that the correspondingly indicated DMRS port is {0, 1} and the corresponding transmission solution is SDM transmission, the DMRS ports corresponding to the PUSCH transmissions in respective beam directions may also be determined according to a predefined rule. A possible port allocation is that PUSCH transmission in a first beam direction uses a DMRS port {0}, and the corresponding TRI is 1, and PUSCH transmission in a second beam direction uses a DMRS port {1}, and the corresponding TRI is 1.

At step S502, a single DCI carrying a plurality of SRI indication fields is sent to a UE, to indicate precoding information used by the UE during performing non-codebook based PUSCH STxMP under single DCI scheduling, in which, each SRI indication field of the plurality of SRI indication fields indicates an SRI according to an SRI sub-table.

Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same. The SRI sub-table is determined from a codebook preconfiguration table according to the TRI used for the PUSCH transmission in the corresponding beam direction, and the SRI preconfiguration table is determined based on a maximum count of uplink transmission layers supported by the PUSCH transmission in the corresponding beam direction and a count of SRS resources in an SRS resource set allocated for the PUSCH transmission in the corresponding beam direction, and a count of bits occupied by each SRI indication field is determined according to a maximum value $N_{max}$ of a count of available SRI combinations corresponding to each available TRI in the corresponding SRI preconfiguration table. Each available TRI is determined according to a less one of the maximum count of uplink transmission layers supported by the PUSCH transmission in the corresponding beam direction and the count of SRS resources in the SRS resource set allocated for the PUSCH transmission in the corresponding beam direction.

In an embodiment, the single DCI sent by the network device to the UE carries the plurality of SRI indication fields. The non-codebook based PUSCH transmission in each beam direction corresponds to one SRI indication field, that is, one SRI indication field may indicate the SRS resources of the non-codebook based PUSCH transmission in one beam direction. The network equipment may determine the maximum count of uplink transmission layers supported by the PUSCH transmission in each beam direction and the count of SRS resources in the SRS resource set allocated for the PUSCH transmission in each beam direction, and then determine the SRI preconfiguration table used for the PUSCH transmission in each beam direction. In addition, the network device may obtain the TRI used for the PUSCH transmission in each beam direction, and then may determine the SRI sub-table from the determined SRI preconfiguration table. Each SRI indication field included in the transmission configuration information carried in the DCI sent by the network device to the UE may carry an index, which is used to indicate the SRI based on the SRI sub-table. The count of bits occupied by the SRI indication field is determined according to a maximum count of available SRI combinations corresponding to each available TRI in the corresponding SRI preconfiguration table.

In an example, for a PUSCH transmission associated with one antenna panel/TRP/PUSCH TO/TCI beam direction, in a case that the network device determines that the maximum count of uplink transmission layers supported by the PUSCH transmission in the beam direction is 4 ($L_{max}$=4), and the count of SRS resources in the SRS resource set allocated for the PUSCH transmission in the beam direction is 3 ($N_{SRS}$=3), the network device may determine that the SRI preconfiguration table for the PUSCH transmission in the beam direction is a table corresponding to black bold texts in Table 1. In addition, the network device obtains the value of the TRI used for the PUSCH transmission in the beam direction, the network device may determine that the corresponding SRI sub-table is a subset with the value of TRI being the obtained value in the table. For example, if TRI=3 is obtained, the network device may determine that the corresponding SRI sub-table is a subset with TRI =3 (3 SRIs) in the table, and indexes in the SRI sub-table are reordered, as shown in Table 5. For another example, if TRI=2 is obtained, the network device may determine that the corresponding SRI sub-table is a subset with TRI =2 (2 SRIs) in the table, and indexes in the SRI sub-table are reordered, as shown in Table 6. The SRI indication field used to indicate the SRS resource for the PUSCH transmission in the beam direction may indicate the SRI according to the SRI sub-table. For example, in Table 6 determined according to TRI=2, if the SRI indication field carries index 1, then it indicates SRI=0, 2. If the SRI indication field carries index 2, it indicates SRI=1, 2.

In the determined SRI preconfiguration table, the available TRI is greater than or equal to 1 and less than or equal to the less one of $L_{max}$ and $N_{SRS}$ (in this example, min{$L_{max}$, $N_{SRS}$}=3), namely, 1, 2, 3. When TRI=1, the count of available SRI combinations is 3. When TRI=2, the count of available SRI combinations is 3. When TRI=3, the count of available SRI combinations is 1. Then the count of bits occupied by the SRI indication field may be determined as $\lceil \log_2 3 \rceil = 2$, where $\lceil \rceil$ denotes rounding up.

Table 5

| index | SRI(s), $N_{SRS}$ = 3 |
|-------|------------------------|
| 0     | 0,1,2                  |
| 1-3   | Reversed               |

Table 6

| index | SRI(s), $N_{SRS}$ = 3 |
|-------|------------------------|
| 0 | 0,1 |
| 1 | 0,2 |
| 2 | 1,2 |
| 3 | Reversed |

As shown above, although the available SRI combination in the SRI sub-table determined based on TRI=3 only includes one kind of {0,1,2}, but the count of codepoints of the SRI sub-table is determined based on the maximum number of available SRI combinations corresponding to all available TRIs in the corresponding codebook preconfiguration table, that is, determined based on the count 3 of available SRI combinations corresponding to TRI=2. Therefore, the count of codepoints in the SRI sub-table is 4 bits.

In some embodiments, for a specific TRI, a count of codepoints in the SRI sub-table is 2^M2, wherein K2 codepoints respectively represent K2 SRI values corresponding to the specific TRI in the corresponding SRI preconfiguration table, and the remaining (2^M2-K2) codepoints are reserved values, where M2 is $\lceil log_2(N2_{max}) \rceil$, $\lceil \; \rceil$ denotes rounding up.

For example, with reference to the above examples, for TRI=3, 1 codepoint represents a value of the SRI with TRI=3 in the corresponding codebook preconfiguration table, and the remaining 3 bits are reserved bits, as shown in Table 5 above.

For TRI=2, 3 codepoints respectively represent values of the SRIs with TRI=2 in the corresponding codebook preconfiguration table, and the remaining 1 bit is reserved bits, as shown in Table 6.

For PUSCH transmission in one beam direction, in a case that the network device determines that the maximum count of uplink transmission layers supported by the PUSCH transmission in the beam direction is 3 ($L_{max}$=3), and the count of SRS resources in the SRS resource set allocated for the PUSCH transmission in the beam direction is 4 ($N_{SRS}$=4), the network device may determine that the SRI preconfiguration table for the PUSCH transmission in the beam direction is a table corresponding to black bold texts in Table 2. In addition, the network device obtains the value of the TRI used for the PUSCH transmission in the beam direction, the network device may determine that the corresponding SRI sub-table is a subset with the value of TRI being the obtained value in the table. For example, if TRI=3 is obtained, the network device may determine that the corresponding SRI sub-table is a subset with TRI =3 (3 SRIs) in the table, and indexes in the SRI sub-table are reordered, as shown in Table 7. For another example, if TRI=2 is obtained, the network device may determine that the corresponding SRI sub-table is a subset with TRI =2 (2 SRIs) in the table, and indexes in the SRI sub-table are reordered, as shown in Table 8. The SRI indication field used to indicate the SRS resource for the PUSCH transmission in the beam direction may indicate the SRI according to the SRI sub-table. For example, in Table 8 determined according to TRI=2, if the SRI indication field carries index 1, then it indicates SRI=0, 2. If the SRI indication field carries index 2, it indicates SRI=1, 2.

In the determined SRI preconfiguration table, the available TRI is greater than or equal to 1 and less than or equal to the less one of $L_{max}$ and $N_{SRS}$ (in this example, min{$L_{max}$,$N_{SRS}$}=3), namely, 1, 2, 3. When TRI=1, the count of available SRI combinations is 3. When TRI=2, the count of available SRI combinations is 6. When TRI=3, the count of available SRI combinations is 4. Then the count of bits occupied by the SRI indication field may be determined as $\lceil log_2 6 \rceil = 3$, where $\lceil \; \rceil$ denotes rounding up.

Table 7

| index | SRI(s), $N_{SRS}$ = 4 |
|-------|------------------------|
| 0 | 0,1,2 |
| 1 | 0,1,3 |
| 2 | 0,2,3 |
| 3 | 1,2,3 |
| 4-7 | Reversed |

Table 8

| index | SRI(s), $N_{SRS} = 4$ |
|-------|----------|
| 0 | 0,1 |
| 1 | 0,2 |
| 2 | 0,3 |
| 3 | 1,2 |
| 4 | 1,3 |
| 5 | 2,3 |
| 6-7 | Reversed |

As shown above, although the available SRI combinations in the SRI sub-table determined based on TRI=3 only include four kinds of {0,1,2}, {0,1,3}, {0,2,3}, {1,2,3}, but the count of codepoints of the SRI sub-table is determined based on the maximum number of available SRI combinations corresponding to all available TRIs in the corresponding codebook preconfiguration table, that is, determined based on the count 6 of available SRI combinations corresponding to TRI=2. Therefore, the count of codepoints in the SRI sub-table is 8 bits.

For TRI=3, 4 codepoint represents respectively represent values of the SRIs with TRI=3 in the corresponding codebook preconfiguration table, and the remaining 4 bits are reserved bits, as shown in Table 7 above.

For TRI=2, 6 codepoints respectively represent values of the SRIs with TRI=2 in the corresponding codebook preconfiguration table, and the remaining 2 bits are reserved bits, as shown in Table 8 above.

In some embodiments, an association between the SRI indication field and the SRS resource set may be predefined or indicated by an SRS resource set indication field in the single DCI.

Assumed that TCI beam indication information carried in the single DCI sent by the network device indicates three beams (corresponding to a first beam direction, a second beam direction, and a third beam direction respectively), and transmission configuration information carried in the single DCI includes three SRI indication fields (that is, a first SRI indication field, a second SRI indication field and a third SRI indication field, respectively). In an example, the network device and the UE may predefine that, the first SRI indication field instructs to select SRS resources from an SRS resource set allocated for PUSCH transmission in the first beam direction, that is, the first SRI indication field indicates the SRS resources used for the PUSCH transmission in the first beam direction, and the second SRI indication field instructs to select SRS resources from an SRS resource set allocated for PUSCH transmission in the second beam direction, and the third SRI indication field instructs to select SRS resources from an SRS resource set allocated for PUSCH transmission in the third beam direction. In another example, the network device may indicates through the SRS resource set indication field in the single DCI. For example, the SRS resource set indication field is newly added to the single DCI. The SRS resource set indication field indicates that the first SRI indication field instructs to select the SRS resources from the SRS resource set allocated for the PUSCH transmission in the first beam direction, and the second SRI indication field instructs to select the SRS resources from the SRS resource set allocated for the PUSCH transmission in the second beam direction, and the third SRI indication field instructs to select SRS resources from the SRS resource set allocated for the PUSCH transmission in the third beam direction.

According to the method of precoding indication for non-codebook based PUSCH transmission, the single DCI carrying the plurality of SRI indication fields is sent to the UE, to indicate the precoding information used by the UE during performing the non-codebook based PUSCH STxMP under single DCI scheduling. The respective counts of SRS resources in the SRS resource set allocated for the PUSCH transmission in the respective beam directions of the UE are not completely the same, and the respective maximum counts of uplink transmission layers supported by the PUSCH transmission in the respective beam directions are not completely the same. Each SRI indication field indicates the SRI only. Therefore, it may allow the UE to flexibly implement simultaneous uplink transmission for multiple TRPs through multiple antenna panels, which may further improve uplink system transmission throughput and transmission reliability.

FIG. 6 is a flowchart of a method of precoding indication for non-codebook based PUSCH transmission according to an embodiment of the present disclosure. As illustrated in FIG. 6, the method is performed by a UE, and may include the following step.

At step S601, a single DCI carrying a plurality of SRI indication fields is received, in which, the single DCI indicates precoding information used by the UE during performing non-codebook based PUSCH STxMP under single DCI scheduling.

Each SRI indication field among the plurality of SRI indication fields indicates one or more SRS resources carrying the precoding information in an associated SRS resource set, rendering that the UE, in a case of performing STxMP, performs non-codebook based PUSCH transmission in a corresponding beam direction using the precoding information indicated by each SRI indication field. Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same.

In an embodiment of the present disclosure, the SRI indication field is used to carry an index, and the index is used to indicate one or more SRS resources selected by the network device from the plurality of SRS resources configured for the UE.

For example, in an embodiment of the present disclosure, in a non-codebook based uplink transmission mode, the network device sends the single DCI carrying the plurality of SRI indication fields to the UE, to configure for the UE the SRS resources used for the PUSCH transmission in each beam direction.

It should be noted that the respective maximum counts of uplink transmission layers supported by the PUSCH transmission in the respective beam directions of the UE and the respective counts of SRS resources in the SRS resource set allocated for the PUSCH transmission in the respective beam directions may be configured through signaling. The maximum counts of uplink transmission layers supported by the PUSCH transmission in different beam directions of the UE may be different, the counts of SRS resources in the SRS resource set allocated for the PUSCH transmission in different beam directions may also be different.

In some embodiments, an association between the SRI indication field and the SRS resource set may be predefined or indicated by an SRS resource set indication field in the single DCI.

Assumed that TCI beam indication information carried in the single DCI sent by the network device indicates three beams (corresponding to a first beam direction, a second beam direction, and a third beam direction respectively), and transmission configuration information carried in the single DCI includes three SRI indication fields (that is, a first SRI indication field, a second SRI indication field and a third SRI indication field, respectively). In an example, the network device and the UE may predefine that, the first SRI indication field instructs to select SRS resources from an SRS resource set allocated for PUSCH transmission in the first beam direction, that is, the first SRI indication field indicates the SRS resources used for the PUSCH transmission in the first beam direction, and the second SRI indication field instructs to select SRS resources from an SRS resource set allocated for PUSCH transmission in the second beam direction, and the third SRI indication field instructs to select SRS resources from an SRS resource set allocated for PUSCH transmission in the third beam direction. In another example, the network device may indicates through the SRS resource set indication field in the single DCI. For example, the SRS resource set indication field is newly added to the single DCI. The SRS resource set indication field indicates that the first SRI indication field instructs to select the SRS resources from the SRS resource set allocated for the PUSCH transmission in the first beam direction, and the second SRI indication field instructs to select the SRS resources from the SRS resource set allocated for the PUSCH transmission in the second beam direction, and the third SRI indication field instructs to select SRS resources from the SRS resource set allocated for the PUSCH transmission in the third beam direction.

In some embodiments, a correspondence between the beam direction and the PUSCH transmission is determined by any one of:

an antenna panel, a transmission and reception point (TRP), transmission control information (TCI), a PUSCH transmission occasion (TO), or an SRS resource set.

That is, the PUSCH transmission may be associated with the antenna panel/TRP/PUSCH TO/SRS resource set.

For example, in an embodiment of the present disclosure, assumed that the UE performs the PUSCH transmission in two beam directions through two antenna panels. Antenna panel 1 sends beam 1 to a northwest direction, and antenna panel 2 sends beam 2 to a northeast direction. The beam 1 may correspond to a channel PUSCH1, and the beam 2 may correspond to a channel PUSCH2.

At step 602, the non-codebook based PUSCH transmission is performed based on the single DCI.

After receiving the single DCI, the UE performs the PUSCH transmission based on the single DCI.

According to the method of precoding indication for non-codebook based PUSCH transmission, the single DCI carrying the plurality of SRI indication fields is sent to the UE, to indicate the precoding information used by the UE during performing the non-codebook based PUSCH STxMP under single DCI scheduling. The UE performs the non-codebook based PUSCH transmission in the corresponding beam direction using the precoding information carried by one or more SRS resources indicated by each SRI indication field. The respective counts of SRS resources in the SRS resource set allocated for the PUSCH transmission in the respective beam directions of the UE are not completely the same, and the respective maximum counts of uplink transmission layers supported by the PUSCH transmission in the respective beam directions are not completely the same. This may allow the UE to flexibly implement simultaneous uplink transmission for multiple TRPs through multiple antenna panels, which may further improve uplink system transmission throughput and transmission reliability.

FIG. 7 is a flowchart of a method of precoding indication for non-codebook based PUSCH transmission according to an embodiment of the present disclosure. As illustrated in FIG. 7, the method is performed by a UE, and may include the following step.

At step S701, a single DCI carrying a plurality of SRI indication fields is received, in which, the single DCI indicates precoding information used by the UE during performing non-codebook based PUSCH STxMP under single DCI scheduling, each SRI indication field of the plurality of SRI indication fields indicates an SRI and a transmission rank indication (TRI) according to an SRI preconfiguration table.

Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same. The SRI preconfiguration table is determined according to a maximum count of uplink transmission layers supported by the PUSCH transmission in the corresponding beam direction and a count of SRS resources in an SRS resource set allocated for the PUSCH transmission in the corresponding beam direction, a count of bits occupied by each SRI indication field is determined based on a count of available SRI combinations in the SRI preconfiguration table.

In an example, for a PUSCH transmission in one beam direction, in a case that the network device determines that the maximum count of uplink transmission layers supported by the PUSCH transmission in the beam direction is 4 ($L_{max}$=4), and the count of SRS resources in the SRS resource set allocated for the PUSCH transmission in the beam direction is 3 ($N_{SRS}$=3), the network device may determine that the SRI preconfiguration table for the PUSCH transmission in the beam direction is a table corresponding to black bold texts in Table 1. The SRI indication field used to indicate the SRS resources for the PUSCH transmission in the beam direction may indicate the SRI and the TRI according to this table (implicitly indicated by the count of SRIs). For example, if the SRI indication field carries index 1, it indicates TRI =1, SRI=1, if the SRI indication field carries index 6, it indicates TRI=3, SRI=0, 1, 2. In this table, the count of available SRI combinations is 7, then the count of bits occupied by the SRI indication field may be determined as $\lceil log_2 7 \rceil$=3, where $\lceil \rceil$ denotes rounding up.

In another example, for a PUSCH transmission in another beam direction, in a case that the network device determines that the maximum count of uplink transmission layers supported by the PUSCH transmission in the beam direction is 3 ($L_{max}$=3), and the count of SRS resources in the SRS resource set allocated for the PUSCH transmission in the beam direction is 4 ($N_{SRS}$=4), the network device may determine that the SRI preconfiguration table for the PUSCH transmission in the beam direction is a table corresponding to black bold texts in Table 2. The SRI indication field used to indicate the SRS resources for the PUSCH transmission in the beam direction may indicate the SRI and the TRI according to this table. For example, if the SRI indication field carries index 1, it indicates TRI =1, SRI=1, if the SRI indication field carries index 6, it indicates TRI=2, SRI=1, 2. In this table, the count of available SRI combinations is 14, then the count of bits occupied by the SRI indication field may be determined as $\lceil log_2 14 \rceil$=4, where $\lceil \rceil$ denotes rounding up.

At step 702, an SRS resource used for PUSCH transmission in each beam direction is determined according to an SRI and a TRI indicated by each SRI indication field of the plurality of SRI indication fields and an SRI preconfiguration table.

The UE can determine a maximum count of uplink transmission layers supported by the PUSCH transmission in each beam direction and a count of SRS resources in an SRS resource set allocated for the PUSCH transmission in each beam direction, and may further determine the SRI preconfiguration table for the PUSCH transmission in each beam direction. After receiving the single DCI, the UE determines the SRS resources for the PUSCH transmission in each beam direction based on the SRI and the TRI indicated in each SRI indication field included in the transmission configuration information carried in the single DCI, as well as the SRI preconfiguration table.

For example, the UE receives TCI beam indication information carried in the DCI sent by the network device indicates two beams, namely a first beam direction and a second beam direction, and transmission configuration information includes two SRI indication fields, namely a first SRI indication field and a second SRI indication field. The first SRI indication field carries index 6 and the second SRI indication field indicates index 1. When the UE determines that the maximum count of uplink transmission layers supported by the PUSCH transmission in the first beam direction is 4 ($L_{max}$=4), and the count of SRS resources in the SRS resource set allocated for the PUSCH transmission in the first beam direction is 3 ($N_{SRS}$=3), and determines that the maximum count of uplink transmission layers supported by the PUSCH transmission in the second beam direction is 3 ($L_{max}$=3), and the count of SRS resources in the SRS resource set allocated for the PUSCH transmission in the second beam direction is 4 ($N_{SRS}$=4), the UE determines that the SRI preconfiguration table used for the PUSCH transmission in the first beam direction is the table corresponding to black bold texts in Table 1 above, the codebook preconfiguration table used for the PUSCH transmission in the second beam direction is the table corresponding to black bold texts in Table 2 above. Then, the UE may determine that the SRS resource for the PUSCH transmission in the first beam direction is an SRS resource indicated by TRI=3 and SRI= 0, 1, 2, according to the index 6 carried in the first SRI indication field and the SRI preconfiguration table used for the PUSCH transmission in the first beam direction, and determines that the SRS resource for the PUSCH transmission in the second beam direction is an SRS resource indicated by TRI=1 and SRI=1, according to the index 1 carried in the second SRI indication field and the SRI preconfiguration table for the PUSCH transmission in the second beam direction.

At step 703, the non-codebook based PUSCH transmission is performed using the precoding information carried by the corresponding SRS resource in each beam direction.

After determining the SRS resource for the PUSCH transmission in each beam direction, the UE performs the non-codebook based PUSCH transmission using the precoding information carried by the determined SRS resource in each beam direction.

In some embodiments, an association between the SRI indication field and the SRS resource set may be predefined or indicated by an SRS resource set indication field in the single DCI.

Assumed that TCI beam indication information carried in the single DCI sent by the network device indicates three beams (corresponding to a first beam direction, a second beam direction, and a third beam direction respectively), and transmission configuration information carried in the single DCI includes three SRI indication fields (that is, a first SRI indication field, a second SRI indication field and a third SRI indication field, respectively). In an example, the network device and the UE may predefine that, the first SRI indication field instructs to select SRS resources from an SRS resource set allocated for PUSCH transmission in the first beam direction, that is, the first SRI indication field indicates the SRS resources used for the PUSCH transmission in the first beam direction, and the second SRI indication field instructs to select SRS resources from an SRS resource set allocated for PUSCH transmission in the second beam direction, and the third SRI indication field instructs to select SRS resources from an SRS resource set allocated for PUSCH transmission in the third beam direction. In another example, the network device may indicates through the SRS resource set indication field in the single DCI. For example, the SRS resource set indication field is newly added to the single DCI. The SRS resource set indication field indicates that the first SRI indication field instructs to select the SRS resources from the SRS resource set allocated for the PUSCH transmission in the first beam direction, and the second SRI indication field instructs to select the SRS resources from the SRS resource set allocated for the PUSCH transmission in the second beam direction, and the third SRI indication field instructs to select SRS resources from the SRS resource set allocated for the PUSCH transmission in the third beam direction.

According to the method of precoding indication for non-codebook based PUSCH transmission, the single DCI carrying the plurality of SRI indication fields is sent to the UE, to indicate the precoding information used by the UE during performing the non-codebook based PUSCH STxMP under the single DCI scheduling. The respective counts of SRS resources in the SRS resource set allocated for the PUSCH transmission in the respective beam directions of the UE are not completely the same, and the respective maximum counts of uplink transmission layers supported by the PUSCH transmission in the respective beam directions are not completely the same, and each SRI indication field indicates both the SRI and the TRI. This may allow the UE to flexibly implement simultaneous uplink transmission for multiple TRPs through multiple antenna panels, which may further improve uplink system transmission throughput and transmission reliability.

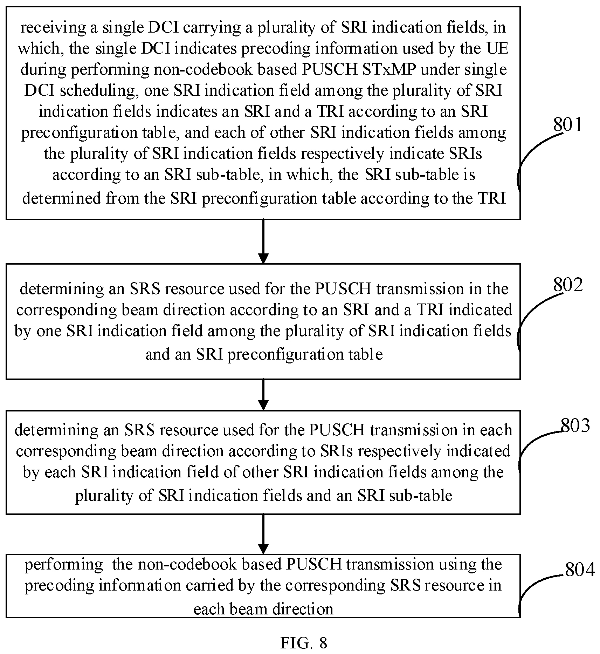

FIG. 8 is a flowchart of a method of precoding indication for non-codebook based PUSCH transmission according to an embodiment of the present disclosure. As illustrated in FIG. 8, the method is performed by a network device, and may include the following step.

At step S801, a single DCI carrying a plurality of SRI indication fields is received, in which, the single DCI indicates precoding information used by the UE during performing non-codebook based PUSCH STxMP under single DCI scheduling, one SRI indication field among the plurality of SRI indication fields indicates an SRI and a TRI according to an SRI preconfiguration table, and each of other SRI indication fields among the plurality of SRI indication fields respectively indicate SRIs according to an SRI sub-table, in which, the SRI sub-table is determined from the SRI preconfiguration table according to the TRI.

Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same, and the same TRI is used for PUSCH transmission in each beam direction of the UE. A count of bits occupied by the one SRI indication field for indicating the SRI and the TRI is determined according to a count of available SRI combinations in the SRI preconfiguration table. A count of bits occupied by each SRI indication field in the other SRI indication fields for indicating the SRIs is determined according to a maximum value $N_{max}$ of a count of available SRI combinations corresponding to each available TRI in the corresponding SRI preconfiguration table. Each available TRI is determined a less one of a maximum count of uplink transmission layers supported by the PUSCH transmission in the corresponding beam direction and a count of SRS resources in an SRS resource set allocated for the PUSCH transmission in the corresponding beam direction.

In an example, for a first PUSCH transmission associated with one antenna panel/TRP/PUSCH TO/TCI beam direction, in a case that the network device determines that the maximum count of uplink transmission layers supported by the PUSCH transmission in the beam direction is 4 ($L_{max}$=4), and the count of SRS resources in the SRS resource set allocated for the PUSCH transmission in the beam direction is 3 ($N_{SRS}$=3), the network device may determine that the SRI preconfiguration table for the PUSCH transmission in the beam direction is a table corresponding to black bold texts in Table 1. The SRI indication field used to indicate the SRS resources for the PUSCH transmission in the beam direction may indicate the SRI and the TRI according to this table (implicitly indicated by the count of SRIs). For example, if the SRI indication field carries index 1, it indicates TRI =1, SRI=1, if the SRI indication field carries index 6, it indicates TRI=3, SRI=0, 1, 2. In this table, the count of available SRI combinations is 7, then the count of bits occupied by the SRI indication field may be determined as [log27]=3, where ⌈ ⌉ denotes rounding up.

In a case that, for the first PUSCH transmission, the index carried in the SRI indication field is 6, it can be seen that the TRI used for the PUSCH transmission in each beam direction of the UE is 3. Then for a second PUSCH transmission associated with another antenna panel/TRP/PUSCH TO/TCI beam direction, in a case that the network device determines that the maximum count of uplink transmission layers supported by the PUSCH transmission in the beam direction is 3 ($L_{max}$ =3), and the count of SRS resources in the SRS resource set allocated for the PUSCH transmission in the beam direction is 4 ($N_{SRS}$=4), the network device may determine that the SRI preconfiguration table for the PUSCH transmission in the beam direction is a table corresponding to black bold texts in Table 2. In addition, according to a value 3 of the TRI used for the PUSCH transmission in the beam direction, the network device may determine that the corresponding SRI sub-table is a subset with the value of TRI being 3 in the table, that is, the corresponding SRI sub-table is a subset of TRI =3 (3 SRIs) in the table, and indexes in the SRI sub-table are reordered, as shown in Table 3. The SRI indication field used to indicate the SRS resource for the PUSCH transmission in the beam direction may indicate the SRI according to the SRI sub-table. For example, in Table 3 determined according to TRI=3, if the SRI indication field carries index 1, then it indicates SRI=0, 1, 2. If the SRI indication field carries index 2, it indicates SRI=0, 2, 3.

In the determined SRI preconfiguration table, the available TRI is greater than or equal to 1 and less than or equal to the less one of $L_{max}$ and $N_{SRS}$ (in this example, min{$L_{max}$ ,$N_{SRS}$}=3), namely, 1, 2, 3. When TRI=1, the count of available SRI combinations is 3. When TRI=2, the count of available SRI combinations is 6. When TRI=3, the count of available SRI combinations is 4. Then the count of bits occupied by the SRI indication field may be determined as $\lceil \log_2 6 \rceil = 3$ , where ⌈⌉ denotes rounding up.

As shown above, although the available SRI combinations in the SRI sub-table determined based on TRI=3 only include four kinds of {0,1,2}, {0,1,3}, {0,2,3}, {1, 2,3}, but the count of codepoints of the SRI sub-table is determined based on the maximum number of available SRI combinations corresponding to all available TRIs in the corresponding codebook preconfiguration table, that is, determined based on the count 6 of available SRI combinations corresponding to TRI=2. Therefore, the count of codepoints in the SRI sub-table is 8 bits.

For TRI=3, 4 codepoints respectively represent values of the SRIs with TRI=3 in the corresponding codebook preconfiguration table, and the remaining 4 bits are reserved bits, as shown in Table 3 above.

For TRI=2, 6 codepoints respectively represent values of the SRIs with TRI=2 in the corresponding codebook preconfiguration table, and the remaining 2 bits are reserved bits, as shown in Table 4.

At step 802, an SRS resource used for the PUSCH transmission in the corresponding beam direction is determined according to an SRI and a TRI indicated by one SRI indication field among the plurality of SRI indication fields and an SRI preconfiguration table.

At step 803, an SRS resource used for the PUSCH transmission in each corresponding beam direction is determined according to SRIs respectively indicated by each SRI indication field of other SRI indication fields among the plurality of SRI indication fields and an SRI sub-table.

The UE can determine a maximum count of uplink transmission layers supported by the PUSCH transmission in each beam direction and a count of SRS resources in an SRS resource set allocated for the PUSCH transmission in each beam direction, and may further determine the SRI preconfiguration table for the PUSCH transmission in each beam direction. After receiving the single DCI, the UE determines the SRS resource for the PUSCH transmission in each beam direction based on the SRI and TRI indicated in one SRI indication field carried in the single DCI, as well as the SRI preconfiguration table, and determines the SRS resource for the PUSCH transmission in the corresponding beam direction based on the SRIs carried in other SRI indication fields carried in the single DCI and the SRI sub-table. The UE determines the SRI sub-table from the corresponding SRI preconfiguration table based on the TRI indicated in one SRI indication field.

For example, the UE receives the TCI beam indication information carried in the DCI sent by the network device indicates two beams, namely a first beam direction and a second beam direction, and transmission configuration information includes two SRI indication fields, namely a first SRI indication field and a second SRI indication field. The first SRI indication field carries index 6 and the second SRI indication field indicates index 1. When the UE determines that the maximum count of uplink transmission layers supported by the PUSCH transmission in the first beam direction is 4 ($L_{max}$=4), and the count of SRS resources in the SRS resource set allocated for the PUSCH transmission in the first beam direction is 3 ($N_{SRS}$=3), and determines that the maximum count of uplink transmission layers supported by the PUSCH transmission in the second beam direction is 3 ($L_{max}$=3), and the count of SRS resources in the SRS resource set allocated for the PUSCH transmission in the second beam direction is 4 ($N_{SRS}$=4), the UE determines that the SRI preconfiguration table used for the PUSCH transmission in the first beam direction is the table corresponding to black bold texts in Table 1 above, the codebook preconfiguration table used for the PUSCH transmission in the second beam direction is the table corresponding to black bold texts in Table 2 above. Then, the UE may determine that the SRS resource for the PUSCH transmission in the first beam direction is SRS resources indicated by TRI=3 and SRI= 0, 1, 2, according to the index 6 carried in the first SRI indication field and the SRI preconfiguration table used for the PUSCH transmission in the first beam direction, and determines the SRI sub-table as Table 3 based on the TRI=3 and the SRI preconfiguration table used for the PUSCH transmission in the second beam direction, and determines that the SRS resource for the PUSCH transmission in the second beam direction is the SRS resource indicated by SRI=0, 1, 2, according to the index 1 carried in the second SRI indication field and the SRI sub-table.

At step 804, the non-codebook based PUSCH transmission is performed using the precoding information carried by the corresponding SRS resource in each beam direction.

After determining the SRS resource for the PUSCH transmission in each beam direction, the UE performs the non-codebook based PUSCH transmission using the precoding information carried by the determined SRS resource in each beam direction.

In some embodiments, an association between the SRI indication field and the SRS resource set may be predefined or indicated by an SRS resource set indication field in the single DCI.

Assumed that TCI beam indication information carried in the single DCI sent by the network device indicates three beams (corresponding to a first beam direction, a second beam direction, and a third beam direction respectively), and transmission configuration information carried in the single DCI includes three SRI indication fields (that is, a first SRI indication field, a second SRI indication field and a third SRI indication field, respectively). In an example, the network device and the UE may predefine that, the first SRI indication field instructs to select SRS resources from an SRS resource set allocated for PUSCH transmission in the first beam direction, that is, the first SRI indication field indicates the SRS resources used for the PUSCH transmission in the first beam direction, and the second SRI indication field instructs to select SRS resources from an SRS resource set allocated for PUSCH transmission in the second beam direction, and the third SRI indication field instructs to select SRS resources from an SRS resource set allocated for PUSCH transmission in the third beam direction. In another example, the network device may indicates through the SRS resource set indication field in the single DCI. For example, the SRS resource set indication field is newly added to the single DCI. The SRS resource set indication field indicates that the first SRI indication field instructs to select the SRS resources from the SRS resource set allocated for the PUSCH transmission in the first beam direction, and the second SRI indication field instructs to select the SRS resources from the SRS resource set allocated for the PUSCH transmission in the second beam direction, and the third SRI indication field instructs to select SRS resources from the SRS resource set allocated for the PUSCH transmission in the third beam direction.

According to the method of precoding indication for non-codebook based PUSCH transmission, the single DCI carrying the plurality of SRI indication fields is sent to the UE, to indicate the precoding information used by the UE during performing the non-codebook based PUSCH STxMP under single DCI scheduling. The respective counts of SRS resources in the SRS resource set allocated for the PUSCH transmission in the respective beam directions of the UE are not completely the same, and the respective maximum counts of uplink transmission layers supported by the PUSCH transmission in the respective beam directions are not completely the same. One SRI indication field among the plurality of SRI indication fields indicates the SRI and the TRI according to the SRI preconfiguration table, and other SRI indication fields indicate SRIs according to an SRI sub-table. Therefore, it may allow the UE to flexibly implement simultaneous uplink transmission for multiple TRPs through multiple antenna panels, which may further improve uplink system transmission throughput and transmission reliability.

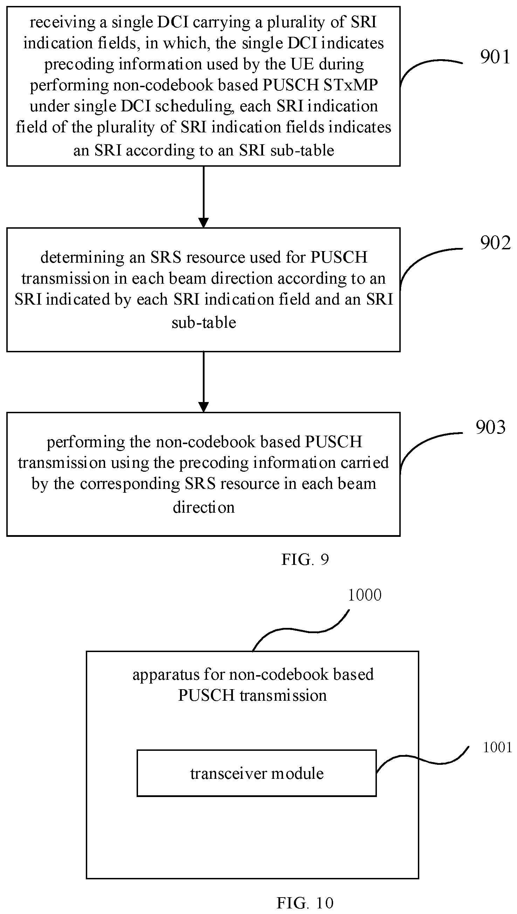

FIG. 9 is a flowchart of a method of precoding indication for non-codebook based PUSCH transmission according to an embodiment of the present disclosure. As illustrated in FIG. 9, the method is performed by a network device, and may include the following step.

At step S901, a single DCI carrying a plurality of SRI indication fields is received, in which, the single DCI indicates precoding information used by the UE during performing non-codebook based PUSCH STxMP under single DCI scheduling, each SRI indication field of the plurality of SRI indication fields indicates an SRI according to an SRI sub-table.

Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same. The SRI sub-table is determined from a codebook preconfiguration table according to the TRI used for the PUSCH transmission in the corresponding beam direction, and the SRI preconfiguration table is determined based on a maximum count of uplink transmission layers supported by the PUSCH transmission in the corresponding beam direction and a count of SRS resources in an SRS resource set allocated for the PUSCH transmission in the corresponding beam direction, and a count of bits occupied by each SRI indication field is determined according to a maximum value $N_{max}$ of a count of available SRI combinations corresponding to each available TRI in the corresponding SRI preconfiguration table. Each available TRI is determined according to a less one of the maximum count of uplink transmission layers supported by the PUSCH transmission in the corresponding beam direction and the count of SRS resources in the SRS resource set allocated for the PUSCH transmission in the corresponding beam direction.

In an example, for a PUSCH transmission in one beam direction, in a case that the network device determines that the maximum count of uplink transmission layers supported by the PUSCH transmission in the beam direction is 4

($L_{max}$=4), and the count of SRS resources in the SRS resource set allocated for the PUSCH transmission in the beam direction is 4 ($N_{SRS}$=4), the network device may determine that the SRI preconfiguration table for the PUSCH transmission in the beam direction is a table corresponding to black bold texts in Table 1. In addition, the network device obtains the value of the TRI used for the PUSCH transmission in the beam direction, the network device may determine that the corresponding SRI sub-table is a subset with the value of TRI being the obtained value in the table. For example, if TRI=3 is obtained, the network device may determine that the corresponding SRI sub-table is a subset with TRI =3 (3 SRIs) in the table, and indexes in the SRI sub-table are reordered, as shown in Table 5. For another example, if TRI=2 is obtained, the network device may determine that the corresponding SRI sub-table is a subset with TRI =2 (2 SRIs) in the table, and indexes in the SRI sub-table are reordered, as shown in Table 6. The SRI indication field used to indicate the SRS resource for the PUSCH transmission in the beam direction may indicate the SRI according to the SRI sub-table. For example, in Table 5 determined according to TRI=4, if the SRI indication field carries index 1, then it indicates SRI=0, 1, 3. If the SRI indication field carries index 2, it indicates SRI=0, 2, 3.

In the determined SRI preconfiguration table, the available TRI is greater than or equal to 1 and less than or equal to the less one of $L_{max}$ and $N_{SRS}$ (in this example, min{ $L_{max}$= $N_{SRS}$=4), namely, 1, 2, 3, 4. When TRI=1, the count of available SRI combinations is 4. When TRI=2, the count of available SRI combinations is 6. When TRI=3, the count of available SRI combinations is 4. When TRI=4, the count of available SRI combinations is 1. Then the count of bits occupied by the SRI indication field may be determined as $\lceil \log_2 6 \rceil = 3$, where $\lceil \ \rceil$ denotes rounding up.

As shown above, although the available SRI combinations in the SRI sub-table determined based on TRI=3 only include four kinds of {0,1,2}, {0,1,3}, {0,2,3}, {1,2,3}, but the count of codepoints of the SRI sub-table is determined based on the maximum number of available SRI combinations corresponding to all available TRIs in the corresponding codebook preconfiguration table, that is, determined based on the count 6 of available SRI combinations corresponding to TRI=2. Therefore, the count of codepoints in the SRI sub-table is 8 bits.

In some embodiments, for a specific TRI, a count of codepoints in the SRI sub-table is 2^M2, wherein K2 codepoints respectively represent K2 SRI values corresponding to the specific TRI in the corresponding SRI preconfiguration table, and the remaining (2^M2-K2) codepoints are reserved values, where M2 is $\lceil \log_2(N2_{max}) \rceil$, $\lceil \ \rceil$ denotes rounding up.

For example, with reference to the above examples, for TRI=3, 1 codepoint represents a value of the SRI with TRI=3 in the corresponding codebook preconfiguration table, and the remaining 3 bits are reserved bits, as shown in Table 5 above.

For TRI=2, 6 codepoints respectively represent values of the SRIs with TRI=2 in the corresponding codebook preconfiguration table, and the remaining 2 bits are reserved bits, as shown in Table 6.

At step 902, an SRS resource used for PUSCH transmission in each beam direction is determined according to an SRI indicated by each SRI indication field and an SRI sub-table.

The UE can determine a maximum count of uplink transmission layers supported by the PUSCH transmission in each beam direction and a count of SRS resources in an SRS resource set allocated for the PUSCH transmission in each beam direction, and may further determine the SRI preconfiguration table for the PUSCH transmission in each beam direction. In addition, the UE may determine the SRI sub-table used for the PUSCH transmission in each beam direction from the SRI preconfiguration table based on the TRI used for the PUSCH transmission in each beam direction. After receiving the single DCI, the UE determines the SRS resources for the PUSCH transmission in each beam direction based on the SRI indicated in each SRI indication field included in the transmission configuration information carried in the single DCI, as well as the SRI sub-table.

For example, the UE receives TCI beam indication information carried in the DCI sent by the network device indicates two beams, namely a first beam direction and a second beam direction, and transmission configuration information includes two SRI indication fields, namely a first SRI indication field and a second SRI indication field. The first SRI indication field carries index 2 and the second SRI indication field indicates index 5. When the UE determines that the maximum count of uplink transmission layers supported by the PUSCH transmission in the first beam direction is 4 ($L_{max}$=4), and the count of SRS resources in the SRS resource set allocated for the PUSCH transmission in the first beam direction is 3 ($N_{SRS}$=3), and determines that the maximum count of uplink transmission layers supported by the PUSCH transmission in the second beam direction is 3 ($L_{max}$=3), and the count of SRS resources in the SRS resource set allocated for the PUSCH transmission in the second beam direction is 4 ($N_{SRS}$=4), the UE determines that the SRI preconfiguration table used for the PUSCH transmission in the first beam direction is the table corresponding to black bold texts in Table 1 above, the codebook preconfiguration table used for the PUSCH transmission in the second beam direction is the table corresponding to black bold texts in Table 2 above. Then, the UE may determine, based on the TRI=2 used for the PUSCH transmission in the first beam direction, that the SRI sub-table used for the PUSCH transmission in the first beam direction is Table 6 from the corresponding codebook preconfiguration table, and may determine, based on TRI=2 used for the PUSCH transmission in the second beam direction, that the SRI sub-table used for the PUSCH transmission in the second beam direction is Table 11 from the corresponding codebook preconfiguration table. Then, the UE may determine that the SRS resource for the PUSCH transmission in the first beam direction is an SRS resource indicated by SRI= 1, 2, according to the index 2 carried in the first SRI indication field and the SRI preconfiguration table used for the PUSCH transmission in the first beam direction, and determines that the SRS resource for the PUSCH transmission in the second beam direction is an SRS resource indicated by SRI=2, 3, according to the index 5 carried in the second SRI indication field and the SRI preconfiguration table for the PUSCH transmission in the second beam direction.

At step 903, the non-codebook based PUSCH transmission is performed using the precoding information carried by the corresponding SRS resource in each beam direction.

After determining the SRS resource for the PUSCH transmission in each beam direction, the UE performs the non-codebook based PUSCH transmission using the precoding information carried by the determined SRS resource in each beam direction.

In some embodiments, an association between the SRI indication field and the SRS resource set may be predefined or indicated by an SRS resource set indication field in the single DCI.

Assumed that TCI beam indication information carried in the single DCI sent by the network device indicates three beams (corresponding to a first beam direction, a second beam direction, and a third beam direction respectively), and transmission configuration information carried in the single DCI includes three SRI indication fields (that is, a first SRI indication field, a second SRI indication field and a third SRI indication field, respectively). In an example, the network device and the UE may predefine that, the first SRI indication field instructs to select SRS resources from an SRS resource set allocated for PUSCH transmission in the first beam direction, that is, the first SRI indication field indicates the SRS resources used for the PUSCH transmission in the first beam direction, and the second SRI indication field instructs to select SRS resources from an SRS resource set allocated for PUSCH transmission in the second beam direction, and the third SRI indication field instructs to select SRS resources from an SRS resource set allocated for PUSCH transmission in the third beam direction. In another example, the network device may indicates through the SRS resource set indication field in the single DCI. For example, the SRS resource set indication field is newly added to the single DCI. The SRS resource set indication field indicates that the first SRI indication field instructs to select the SRS resources from the SRS resource set allocated for the PUSCH transmission in the first beam direction, and the second SRI indication field instructs to select the SRS resources from the SRS resource set allocated for the PUSCH transmission in the second beam direction, and the third SRI indication field instructs to select SRS resources from the SRS resource set allocated for the PUSCH transmission in the third beam direction.

According to the method of precoding indication for non-codebook based PUSCH transmission, the single DCI carrying the plurality of SRI indication fields is sent to the UE, to indicate the precoding information used by the UE during performing the non-codebook based PUSCH STxMP under single DCI scheduling. The respective counts of SRS resources in the SRS resource set allocated for the PUSCH transmission in the respective beam directions of the UE are not completely the same, and the respective maximum counts of uplink transmission layers supported by the PUSCH transmission in the respective beam directions are not completely the same. Each SRI indication field indicates the SRI only. Therefore, it may allow the UE to flexibly implement simultaneous uplink transmission for multiple TRPs through multiple antenna panels, which may further improve uplink system transmission throughput and transmission reliability.

In the above embodiments of the disclosure, the methods according to the embodiments of the disclosure are described from the perspectives of the user equipment and the network device, respectively. In order to realize each of functions in the methods according to the above embodiments of the disclosure, the user equipment and the network device may include a hardware structure, a software module, and realize each of the above functions in the form of hardware structure, software module, or a combination of hardware structure and software module. A certain function of the above functions may be performed in the form of hardware structure, software module, or a combination of hardware structure and software module.

Corresponding to the methods of precoding indication for non-codebook based PUSCH transmission provided by the above-mentioned embodiments, the present disclosure also provides an apparatus of precoding indication for non-codebook based PUSCH transmission. The apparatus of precoding indication for non-codebook based PUSCH transmission corresponds to the method of precoding indication for non-codebook based PUSCH transmission provided by the above-mentioned embodiments. Therefore, the implementation of the method of precoding indication for non-codebook based PUSCH transmission is also applicable to the apparatus of precoding indication for non-codebook based PUSCH transmission provided in this embodiment and will not be described in detail in this embodiment.

FIG. 10 is a block diagram of an apparatus 1000 of precoding indication for non-codebook based PUSCH transmission according to an embodiment of the disclosure. The apparatus 1000 may be applied to the network device.

As illustrated in FIG. 10, the apparatus 1000 may include a transceiver module 1001.

The transceiver module 1001 is configured to, send a single downlink control information (DCI) carrying a plurality of sounding reference signal (SRS) resource indicator (SRI) indication fields to a user equipment (UE), to indicate precoding information used by the UE during performing non-codebook based PUSCH simultaneous transmission from multiple panels (STxMP) under single DCI scheduling;

in which, each SRI indication field indicates one or more SRS resources carrying the precoding information in an associated SRS resource set, rendering that the UE, in a case of performing STxMP, performs non-codebook based PUSCH transmission in a corresponding beam direction using the precoding information indicated by each SRI indication field.

According to the apparatus of precoding indication for non-codebook based PUSCH transmission, the single DCI carrying the plurality of SRS resource indicator (SRI) indication fields is sent to the UE, to indicate the precoding information used by the UE during performing the non-codebook based PUSCH STxMP under single DCI scheduling. Each SRI indication field among the plurality of SRI indication fields indicates one or more SRS resources carrying the precoding information in the associated SRS resource set, rendering that the UE, in a case of performing STxMP, performs the non-codebook based PUSCH transmission in the corresponding beam direction using the precoding information carried by one or more SRS resources indicated by each SRI indication field. Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same. This may allow the UE to flexibly implement simultaneous uplink transmission for multiple TRPs through multiple antenna panels, which may further improve uplink system transmission throughput and transmission reliability.

In some embodiments, each SRI indication field indicates an SRI and a transmission rank indication (TRI) according to an SRI preconfiguration table, the SRI preconfiguration table is determined according to a maximum count of uplink transmission layers supported by the PUSCH transmission in the corresponding beam direction and a count of SRS resources in an SRS resource set allocated for the PUSCH transmission in the corresponding beam direction, a count of bits occupied by each SRI indication field is determined based on a count of available SRI combinations in the SRI preconfiguration table.

In some embodiments, one SRI indication field among the plurality of SRI indication fields indicates an SRI and a TRI according to an SRI preconfiguration table, and a count of bits occupied by the one SRI indication field is determined according to a count of available SRI combinations in the SRI preconfiguration table; and

other SRI indication fields among the plurality of SRI indication fields respectively indicate SRIs according to an SRI sub-table, in which, the SRI sub-table is determined from the SRI preconfiguration table according to the TRI, and a count of bits occupied by each SRI indication field in the other SRI indication fields is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of a maximum count of uplink transmission layers supported by the PUSCH transmission in the corresponding beam direction and a count of SRS resources in an SRS resource set allocated for the PUSCH transmission in the corresponding beam direction;

the SRI preconfiguration table is determined based on the maximum count of uplink transmission layers supported by the PUSCH transmission in the corresponding beam direction and the count of SRS resources in the SRS resource set allocated for the PUSCH transmission in the corresponding beam direction.

In some embodiments, the transceiver module 1001 is further configured to:

obtain rank indication information, in which, the rank indication information indicates a TRI used for PUSCH transmission in each beam direction of the UE; and
in which, each SRI indication field indicates an SRI according to an SRI sub-table, the SRI sub-table is determined from an SRI preconfiguration table according to the TRI used for the PUSCH transmission in the corresponding beam direction, and the SRI preconfiguration table is determined based on a maximum count of uplink transmission layers supported by the PUSCH transmission in the corresponding beam direction and a count of SRS resources in an SRS resource set allocated for the PUSCH transmission in the corresponding beam direction, and a count of bits occupied by each SRI indication field is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of the maximum count of uplink transmission layers supported by the PUSCH transmission in the corresponding beam direction and the count of SRS resources in the SRS resource set allocated for the PUSCH transmission in the corresponding beam direction.

In some embodiments,, for a specific TRI, a count of codepoints in the SRI sub-table is 2^M, in which, K codepoints respectively represent K SRI values corresponding to the specific TRI in the corresponding SRI preconfiguration table, and the remaining (2^M-K) codepoints are reserved values, where M is $\lceil \log_2(N_{max}) \rceil$, $\lceil \ \rceil$ denotes rounding up.

In some embodiments,, the rank indication information is obtained according to any one of:

a demodulation reference signal (DMRS) field of the single DCI;

a reserved codepoint or an extended codepoint of any indication field in the single DCI;

a new added indication field in the single DCI; or

a count of codewords supported by the single DCI.

In some embodiments,, an association between the SRI indication field and the SRS resource set is predefined or indicated by an SRS resource set indication field in the single DCI.

In some embodiments,, a correspondence between the beam direction and the PUSCH transmission is determined by any one of:

an antenna panel, a transmission and reception point (TRP), transmission control information (TCI), a PUSCH transmission occasion (TO), or an SRS resource set.

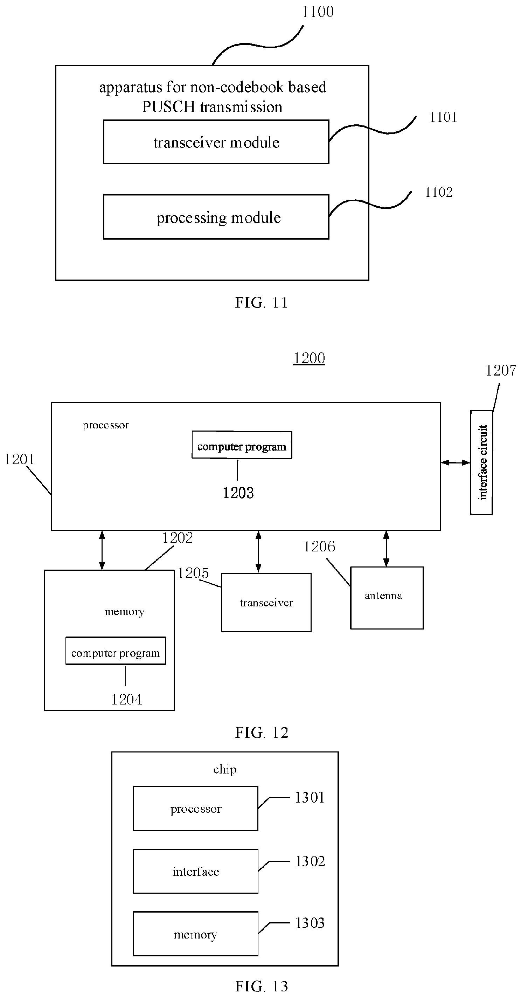

FIG. 11 is a block diagram of an apparatus 1100 of precoding indication for non-codebook based PUSCH transmission according to an embodiment of the disclosure. The apparatus 1100 may be applied to the UE.

As illustrated in FIG. 11, the apparatus 1100 may include a transceiver module 1101 and a processing module 1102.

The transceiver module 1101 is configured to receive a single downlink control information (DCI) carrying a plurality of sounding reference signal (SRS) resource indicator (SRI) indication fields, in which, the single DCI indicates precoding information used by the UE during performing non-codebook based PUSCH simultaneous transmission from multiple panels (STxMP) under single DCI scheduling, wherein each SRI indication field of the plurality of SRI indication fields indicates one or more SRS resources carrying the precoding information in an associated SRS resource set, rendering that the UE, in a case of performing STxMP, performs non-codebook based PUSCH transmission in a corresponding beam direction using the precoding information carried by the one or more SRS resources indicated by each SRI indication field; and

The processing module 1102 is configured to perform the non-codebook based PUSCH transmission based on the single DCI.

According to the apparatus of precoding indication for non-codebook based PUSCH transmission, the single DCI carrying the plurality of SRS resource indicator (SRI) indication fields is sent to the UE, to indicate the precoding information used by the UE during performing the non-codebook based PUSCH STxMP under single DCI scheduling. Each SRI indication field among the plurality of SRI indication fields indicates one or more SRS resources carrying the precoding information in the associated SRS resource set, rendering that the UE, in a case of performing STxMP, performs the non-codebook based PUSCH transmission in the corresponding beam direction using the precoding information carried by one or more SRS resources indicated by each SRI indication field. Respective counts of SRS resources in the SRS resource set allocated for the PUSCH transmission in respective beam directions of the UE are not completely the same, and respective maximum counts of uplink transmission layers supported by the PUSCH transmission in respective beam directions are not completely the same. This may allow the UE to flexibly implement simultaneous uplink transmission for multiple TRPs through multiple antenna panels, which may further improve uplink system transmission throughput and transmission reliability.

In some embodiments, the processing module 1102 is configured to determine an SRS resource used for PUSCH transmission in each beam direction according to an SRI and a transmission rank indication (TRI) indicated by each SRI indication field and an SRI preconfiguration table, in which, the SRI preconfiguration table is determined according to a maximum count of uplink transmission layers supported by the PUSCH transmission in the corresponding beam direction and a count of SRS resources in an SRS resource set allocated for the PUSCH transmission in the corresponding beam direction, a count of bits occupied by each SRI indication field is determined based on a count of available SRI combinations in the SRI preconfiguration table; and

the transceiver module 1101 is configured to perform the non-codebook based PUSCH transmission using the precoding information carried by the corresponding SRS resource in each beam direction.

In some embodiments, the processing module 1102 is configured to determine an SRS resource used for the PUSCH transmission in the corresponding beam direction according to an SRI and a TRI indicated by one SRI indication field among the plurality of SRI indication fields and an SRI preconfiguration table, in which, a count of bits occupied by the one SRI indication field is determined according to a count of available SRI combinations in the SRI preconfiguration table; and

determine an SRS resource used for the PUSCH transmission in each corresponding beam direction according to SRIs respectively indicated by other SRI indication fields among the plurality of SRI indication fields and an SRI subtable, in which, the SRI sub-table is determined from the SRI preconfiguration table according to the TRI, and a count of bits occupied by each SRI indication field in the other SRI indication fields is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of a maximum count of uplink transmission layers supported by the PUSCH transmission in the corresponding beam direction and a count of SRS resources in an SRS resource set allocated for the PUSCH transmission in the corresponding beam direction; and

the transceiver module 1101 is configured to perform the non-codebook based PUSCH transmission using the precoding information carried by the corresponding SRS resource in each beam direction;

in which, the SRI preconfiguration table is determined based on the maximum count of uplink transmission layers supported by the PUSCH transmission in the corresponding beam direction and the count of SRS resources in the SRS resource set allocated for the PUSCH transmission in the corresponding beam direction.

In some embodiments, the processing module 1102 is configured to determine an SRS resource used for PUSCH transmission in each beam direction according to an SRI indicated by each SRI indication field and an SRI sub-table, in which, the SRI sub-table is determined from an SRI pre-configuration table according to a TRI used for the PUSCH transmission in the corresponding beam direction, and the SRI preconfiguration table is determined based on a maximum count of uplink transmission layers supported by the PUSCH transmission in the corresponding beam direction and a count of SRS resources in an SRS resource set allocated for the PUSCH transmission in the corresponding beam direction, and a count of bits occupied by each SRI indication field is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of the maximum count of uplink transmission layers supported by the PUSCH transmission in the corresponding beam direction and a count of SRS resources in the SRS resource set allocated for the PUSCH transmission in the corresponding beam direction; and

the transceiver module 1101 is configured to perform the non-codebook based PUSCH transmission using the precoding information carried by the corresponding SRS resource in each beam direction.

In some embodiments,, for a specific TRI, a count of codepoints in the SRI sub-table is 2^M, in which, K codepoints respectively represent K SRI values corresponding to the specific TRI in the corresponding SRI preconfiguration table, and the remaining (2^M-K) codepoints are reserved values, where M is $\lceil\log_2(N_{max})\rceil$, $\lceil \ \rceil$ denotes rounding up.

In some embodiments, an association between the SRI indication field and the SRS resource set is predefined or indicated by an SRS resource set indication field in the single DCI.

In some embodiments,, a correspondence between the beam direction and the PUSCH transmission is determined by any one of:

an antenna panel, a transmission and reception point (TRP), transmission control information (TCI), a PUSCH transmission occasion (TO), or an SRS resource set.

Please refer to FIG. 12, FIG. 12 is a schematic structural diagram of a communication device 1200 provided by an embodiment of the present application. The communication device 1200 may be a network device, a user equipment, a chip, a chip system, or a processor that supports the network device to implement the above method, or a chip, a chip system, or a processor that supports the user equipment to implement the above method. The device can be used to implement the method described in the above method embodiment. For details, please refer to the description in the above method embodiment.

The communication device 1200 may include one or more processors 1201. The processor 1201 may be a general purpose processor or a dedicated processor, such as, a baseband processor or a central processor. The baseband processor is used for processing communication protocols and communication data. The central processor is used for controlling the communication apparatus (e.g., base station, baseband chip, terminal device, terminal device chip, DU, or CU), executing computer programs, and processing data of the computer programs.

Optionally, the communication apparatus 1200 may include one or more memories 1202 on which computer programs 1204 may be stored. The processor 1201 executes the computer programs 1204 to cause the communication apparatus 1200 to perform the methods described in the above method embodiments. Optionally, data may also be stored in the memory 1202. The communication apparatus 1200 and the memory 1202 may be set separately or integrated together.

Optionally, the communication apparatus 1200 may also include a transceiver 1205 and an antenna 1206. The transceiver 1205 may be referred to as transceiver unit, transceiver machine, or transceiver circuit, for realizing the transceiver function. The transceiver 1205 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1200 may also include one or more interface circuits 1207. The interface circuits 1207 are used to receive code instructions and transmit them to the processor 1201. The processor 1201 runs the code instructions to cause the communication apparatus 1200 to perform the method described in the method embodiments.

In an implementation, the processor 1201 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1201 may store a computer program 1203, and the computer program 1203 runs on the processor 1201, causing the communication device 1200 to perform the method described in the above method embodiment. The computer program 1203 may be solidified in the processor 1201, in which case the processor 1201 may be implemented by hardware.

In one implementation, the communication device 1200 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network side device or a terminal device, but the scope of the communication device described in the disclosure is not limited thereto, and the structure of the communication device may not be limited by FIG. 12. The communication device may be a stand-alone device or may be part of a larger device. For example, the described communication device may be:

(1) a stand-alone integrated circuit (IC), or chip, or chip system or subsystem;
(2) a set of ICs including one or more ICs, optionally, the set of ICs may also include storage components for storing data and computer programs;
(3) an ASIC, such as a modem;
(4) a module that can be embedded in other devices;
(5) a receiver, a terminal device, a smart terminal device, a cellular phone, a wireless device, a handheld machine, a mobile unit, an in-vehicle device, a network side device, a cloud device, an artificial intelligence device, and the like;; and
(6) others.

The case where the communication apparatus may be a chip or a chip system may be referred to the schematic structural diagram of the chip shown in FIG. 13. In FIG. 13, the chip includes a processor 1301 and an interface 1302. There may be one or more processors 1301, and there may be multiple interfaces 1302.

Optionally, the chip further includes a memory 1303 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the terms "machine-readable medium" and "computer-readable medium" refer to as any computer program product, device, and/or apparatus (for example, a magnetic disk, an optical disk, a memory, a programmable logic device (PLD)) for providing machine instructions and/or data to a programmable processor, including a machine-readable medium that receives machine instructions as machine-readable signals. The term "machine-readable signal" refers to as any signal for providing the machine instructions and/or data to the programmable processor.

The systems and techniques described herein may be implemented in a computing system including a back-end component (e.g., as a data server), or a computing system including a middleware component (e.g., an application server), or a computing system including a front-end component (e.g., a user computer having a graphical user interface or web browser through which the user can interact with implementations of the systems and technologies described herein), or a computing system including any combination of such backend component, middleware component, or front-end component. The components of the system may be interconnected by any form or medium of digital data communication (e. g., a communications network). Examples of communication networks may include: a local area network (LAN), a wide area network (WAN), and the Internet.

The computer system may include a client and a server. The client and the server are generally remote from each other and typically interact over the communications network. The relationship of client and server is created by a computer program running on corresponding computers and having a client-server relationship with each other.

It should be understood that various forms of the process shown above may be used, with steps reordered, added or deleted. For example, each step described in the present disclosure may be executed in parallel, sequentially, or in a different order. As long as the desired results of the technical solution disclosed in the present disclosure can be achieved. The present disclosure does not limit it herein.

In addition, it should be understood that various embodiments of the present disclosure may be implemented alone or in combination with other embodiments if the solution allows.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

**Claims**

1. A method of precoding indication for non-codebook based physical uplink shared channel (PUSCH) transmission, performed by a network device, comprising:

   sending a single downlink control information (DCI) carrying a plurality of sounding reference signal (SRS) resource indication (SRI) indication fields to a user equipment (UE), to indicate precoding information used by the UE during performing non-codebook based PUSCH simultaneous transmission from multiple panels (STxMP) under single DCI scheduling;
   wherein each SRI indication field indicates one or more SRS resources carrying the precoding information in an associated SRS resource set, rendering that the UE, in a case of performing STxMP, performs non-codebook based PUSCH transmission in a corresponding beam direction using the precoding information indicated by each SRI indication field.

2. The method according to claim 1, wherein each SRI indication field indicates an SRI and a transmission rank indication (TRI) according to an SRI preconfiguration table, the SRI preconfiguration table is determined according to a maximum count of uplink transmission layers supported by the PUSCH transmission in the corresponding beam direction and a count of SRS resources in an SRS resource set allocated for the PUSCH transmission in the corresponding beam direction, a count of bits occupied by each SRI indication field is determined based on a count of available SRI combinations in the SRI preconfiguration table.

3. The method according to claim 1, wherein in a case that the same TRI is used for PUSCH transmission in each beam direction of the UE,

one SRI indication field among the plurality of SRI indication fields indicates an SRI and a TRI according to an SRI preconfiguration table, and a count of bits occupied by the one SRI indication field is determined according to a count of available SRI combinations in the SRI preconfiguration table; and
other SRI indication fields among the plurality of SRI indication fields respectively indicate SRIs according to an SRI sub-table, wherein the SRI sub-table is determined from the SRI preconfiguration table according to the TRI, and a count of bits occupied by each SRI indication field in the other SRI indication fields is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of a maximum count of uplink transmission layers supported by the PUSCH transmission in the corresponding beam direction and a count of SRS resources in an SRS resource set allocated for the PUSCH transmission in the corresponding beam direction;
the SRI preconfiguration table is determined based on the maximum count of uplink transmission layers supported by the PUSCH transmission in the corresponding beam direction and the count of SRS resources in the SRS resource set allocated for the PUSCH transmission in the corresponding beam direction.

4. The method according to claim 1, further comprising:

obtaining rank indication information, wherein the rank indication information indicates a TRI used for PUSCH transmission in each beam direction of the UE; and
wherein each SRI indication field indicates an SRI according to an SRI sub-table, the SRI sub-table is determined from an SRI preconfiguration table according to the TRI used for the PUSCH transmission in the corresponding beam direction, and the SRI preconfiguration table is determined based on a maximum count of uplink transmission layers supported by the PUSCH transmission in the corresponding beam direction and a count of SRS resources in an SRS resource set allocated for the PUSCH transmission in the corresponding beam direction, and a count of bits occupied by each SRI indication field is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of the maximum count of uplink transmission layers supported by the PUSCH transmission in the corresponding beam direction and the count of SRS resources in the SRS resource set allocated for the PUSCH transmission in the corresponding beam direction.

5. The method according to claim 3 or 4, wherein, for a specific TRI, a count of codepoints in the SRI sub-table is 2^M, wherein K codepoints respectively represent K SRI values corresponding to the specific TRI in the corresponding SRI preconfiguration table, and the remaining (2^M-K) codepoints are reserved values, where M is $\lceil \log_2(N_{max}) \rceil$, $\lceil \rceil$ denotes rounding up.

6. The method according to claim 4, wherein the rank indication information is obtained according to any one of:

a demodulation reference signal (DMRS) field of the single DCI;
a reserved codepoint or an extended codepoint of any indication field in the single DCI;
a new added indication field in the single DCI; or
a count of codewords supported by the single DCI.

7. The method according to any one of claims 1 to 6, wherein an association between the SRI indication field and the SRS resource set is predefined or indicated by an SRS resource set indication field in the single DCI.

8. The method according to any one of claims 1 to 7, wherein a correspondence between the beam direction and the PUSCH transmission is determined by any one of:
an antenna panel, a transmission and reception point (TRP), transmission control information (TCI), a PUSCH transmission occasion (TO), or an SRS resource set.

9. A method for non-codebook based physical uplink shared channel (PUSCH) transmission, performed by a user equipment (UE), comprising:

receiving a single downlink control information (DCI) carrying a plurality of sounding reference signal (SRS) resource indicator (SRI) indication fields, wherein the single DCI indicates precoding information used by the UE during performing non-codebook based PUSCH simultaneous transmission from multiple panels (STxMP) under single DCI scheduling, wherein each SRI indication field of the plurality of SRI indication fields indicates one or more SRS resources carrying the precoding information in an associated SRS resource set, rendering that the UE, in a case of performing STxMP, performs non-codebook based PUSCH transmission in a corresponding beam direction using the precoding information carried by the one or more SRS resources indicated by each SRI indication field; and
performing the non-codebook based PUSCH transmission based on the single DCI.

10. The method according to claim 9, wherein performing the non-codebook based PUSCH transmission based on the single DCI comprises:

determining an SRS resource used for PUSCH transmission in each beam direction according to an SRI and a transmission rank indication (TRI) indicated by each SRI indication field and an SRI preconfiguration table, wherein the SRI preconfiguration table is determined according to a maximum count of uplink transmission layers supported by the PUSCH transmission in the corresponding beam direction and a count of SRS resources in an SRS resource set allocated for the PUSCH transmission in the corresponding beam direction, a count of bits occupied by each SRI indication field is determined based on a count of available SRI combinations in the SRI preconfiguration table; and
performing the non-codebook based PUSCH transmission using the precoding information carried by the corresponding SRS resource in each beam direction.

11. The method according to claim 9, wherein in a case that the same TRI is used for PUSCH transmission in each beam direction of the UE, performing the non-codebook based PUSCH transmission based on the single DCI comprises:

determining an SRS resource used for the PUSCH transmission in the corresponding beam direction according to an SRI and a TRI indicated by one SRI indication field among the plurality of SRI indication fields and an SRI preconfiguration table, wherein a count of bits occupied by the one SRI indication field is determined according to a count of available SRI combinations in the SRI preconfiguration table; and
determining an SRS resource used for the PUSCH transmission in each corresponding beam direction according to SRIs respectively indicated by other SRI indication fields among the plurality of SRI indication fields and an SRI sub-table, wherein the SRI sub-table is determined from the SRI preconfiguration table according to the TRI, and a count of bits occupied by each SRI indication field in the other SRI indication fields is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of a maximum count of uplink transmission layers supported by the PUSCH transmission in the corresponding beam direction and a count of SRS resources in an SRS resource set allocated for the PUSCH transmission in the corresponding beam direction; and
performing the non-codebook based PUSCH transmission using the precoding information carried by the corresponding SRS resource in each beam direction;
wherein the SRI preconfiguration table is determined based on the maximum count of uplink transmission layers supported by the PUSCH transmission in the corresponding beam direction and the count of SRS resources in the SRS resource set allocated for the PUSCH transmission in the corresponding beam direction.

12. The method according to claim 9, wherein performing the non-codebook based PUSCH transmission based on the single DCI comprises:

determining an SRS resource used for PUSCH transmission in each beam direction according to an SRI indicated by each SRI indication field and an SRI sub-table, wherein the SRI sub-table is determined from an SRI pre-configuration table according to a TRI used for the PUSCH transmission in the corresponding beam direction, and the SRI preconfiguration table is determined based on a maximum count of uplink transmission layers supported by the PUSCH transmission in the corresponding beam direction and a count of SRS resources in an SRS resource set allocated for the PUSCH transmission in the corresponding beam direction, and a count of bits occupied by each SRI indication field is determined according to a maximum value $N_{max}$ of a count of available SRI combinations corresponding to each available TRI in the corresponding SRI preconfiguration table, where each available TRI is an integer greater than or equal to 1 and less than or equal to a first value, the first value is a less one of the maximum count of uplink transmission layers supported by the PUSCH transmission in the corresponding beam direction and a count of SRS resources in the SRS resource set allocated for the PUSCH transmission in the corresponding beam direction; and

performing the non-codebook based PUSCH transmission using the precoding information carried by the corresponding SRS resource in each beam direction.

13. The method according to claim 11 or 12, wherein, for a specific TRI, a count of codepoints in the SRI sub-table is 2^M, wherein K codepoints respectively represent K SRI values corresponding to the specific TRI in the corresponding SRI preconfiguration table, and the remaining (2^M-K) codepoints are reserved values, where M is $\lceil log_2(N_{max}) \rceil$, $\lceil \rceil$ denotes rounding up.

14. The method according to any one of claims 9 to 13, wherein an association between the SRI indication field and the SRS resource set is predefined or indicated by an SRS resource set indication field in the single DCI.

15. The method according to any one of claims 9 to 14, wherein a correspondence between the beam direction and the PUSCH transmission is determined by any one of:
an antenna panel, a transmission and reception point (TRP), transmission control information (TCI), a PUSCH transmission occasion (TO), or an SRS resource set.

16. An apparatus of precoding indication for non-codebook based physical uplink shared channel (PUSCH) transmission, provided in a network device, comprising:

a transceiver module, configured to send a single downlink control information (DCI) carrying a plurality of sounding reference signal (SRS) resource indicator (SRI) indication fields to a user equipment (UE), to indicate precoding information used by the UE during performing non-codebook based PUSCH simultaneous transmission from multiple panels (STxMP) under single DCI scheduling;
wherein each SRI indication field indicates one or more SRS resources carrying the precoding information in an associated SRS resource set, rendering that the UE, in a case of performing STxMP, performs non-codebook based PUSCH transmission in a corresponding beam direction using the precoding information indicated by each SRI indication field.

17. An apparatus for non-codebook based physical uplink shared channel (PUSCH) transmission, performed by a user equipment (UE), comprising:

a transceiver module, configured to receive a single downlink control information (DCI) carrying a plurality of sounding reference signal (SRS) resource indicator (SRI) indication fields, wherein the single DCI indicates precoding information used by the UE during performing non-codebook based PUSCH simultaneous transmission from multiple panels (STxMP) under single DCI scheduling, wherein each SRI indication field of the plurality of SRI indication field indicates one or more SRS resources carrying the precoding information in an associated SRS resource set, rendering that the UE, in a case of performing STxMP, performs non-codebook based PUSCH transmission in a corresponding beam direction using the precoding information carried by one or more SRS resources indicated by each SRI indication field; and
a processing module, configured to perform the non-codebook based PUSCH transmission based on the single DCI.

18. A communication device, comprising: a transceiver; a memory; and a processor, coupled to the transceiver and the memory, respectively, and configured to execute computer-executable instructions on the memory, and control the transceiver to transmit and receive wireless signals, and to be able to implement the method according to any one of claims 1 to 15.

**19.** A computer storage medium, storing computer-executable instructions, wherein, when the computer-executable instructions are executed by a processor, the method according to any one of claims 1 to 15 is implemented.

sending a single DCI carrying a plurality of sounding reference signal (SRS) resource indicator (SRI) indication fields to a UE, to indicate precoding information used by the UE during performing non-codebook based PUSCH simultaneous transmission from multiple panels (STxMP) under single DCI scheduling

201

FIG. 2

sending a single DCI carrying a plurality of SRI indication fields to a UE, to indicate precoding information used by the UE during performing non-codebook based PUSCH STxMP under single DCI scheduling, in which, each SRI indication field of the plurality of SRI indication fields indicates an SRI and a transmission rank indication (TRI) according to an SRI preconfiguration table

301

FIG. 3

sending a single DCI carrying a plurality of SRI indication fields to a UE, to indicate precoding information used by the UE during performing non-codebook based PUSCH STxMP under single DCI scheduling, in which, one SRI indication field among the plurality of SRI indication fields indicates an SRI and a TRI according to an SRI preconfiguration table, and each of other SRI indication fields among the plurality of SRI indication fields respectively indicate SRIs according to an SRI sub-table, in which, the SRI sub-table is determined from the SRI preconfiguration table according to the TRI

401

FIG. 4

obtaining rank indication information, in which, the rank indication information indicates a TRI used for PUSCH transmission in each beam direction of the UE — 501

↓

sending a single DCI carrying a plurality of SRI indication fields to a UE, to indicate precoding information used by the UE during performing non-codebook based PUSCH STxMP under single DCI scheduling, in which, each SRI indication field of the plurality of SRI indication fields indicates an SRI according to an SRI sub-table — 502

FIG. 5

receiving a single DCI carrying a plurality of SRI indication fields, in which, the single DCI indicates precoding information used by the UE during performing non-codebook based PUSCH STxMP under single DCI scheduling — 601

↓

performing the non-codebook based PUSCH transmission based on the single DCI — 602

FIG. 6

receiving a single DCI carrying a plurality of SRI indication fields, in which, the single DCI indicates precoding information used by the UE during performing non-codebook based PUSCH STxMP under single DCI scheduling, each SRI indication field of the plurality of SRI indication fields indicates an SRI and a transmission rank indication (TRI) according to an SRI preconfiguration table — 701

↓

determining an SRS resource used for PUSCH transmission in each beam direction according to an SRI and a TRI indicated by each SRI indication field of the plurality of SRI indication fields and an SRI preconfiguration table — 702

↓

performing the non-codebook based PUSCH transmission using the precoding information carried by the corresponding SRS resource in each beam direction — 703

FIG. 7

receiving a single DCI carrying a plurality of SRI indication fields, in which, the single DCI indicates precoding information used by the UE during performing non-codebook based PUSCH STxMP under single DCI scheduling, one SRI indication field among the plurality of SRI indication fields indicates an SRI and a TRI according to an SRI preconfiguration table, and each of other SRI indication fields among the plurality of SRI indication fields respectively indicate SRIs according to an SRI sub-table, in which, the SRI sub-table is determined from the SRI preconfiguration table according to the TRI          801

determining an SRS resource used for the PUSCH transmission in the corresponding beam direction according to an SRI and a TRI indicated by one SRI indication field among the plurality of SRI indication fields and an SRI preconfiguration table          802

determining an SRS resource used for the PUSCH transmission in each corresponding beam direction according to SRIs respectively indicated by each SRI indication field of other SRI indication fields among the plurality of SRI indication fields and an SRI sub-table          803

performing the non-codebook based PUSCH transmission using the precoding information carried by the corresponding SRS resource in each beam direction          804

FIG. 8

receiving a single DCI carrying a plurality of SRI indication fields, in which, the single DCI indicates precoding information used by the UE during performing non-codebook based PUSCH STxMP under single DCI scheduling, each SRI indication field of the plurality of SRI indication fields indicates an SRI according to an SRI sub-table ⟶ 901

determining an SRS resource used for PUSCH transmission in each beam direction according to an SRI indicated by each SRI indication field and an SRI sub-table ⟶ 902

performing the non-codebook based PUSCH transmission using the precoding information carried by the corresponding SRS resource in each beam direction ⟶ 903

FIG. 9

1000

apparatus for non-codebook based PUSCH transmission

transceiver module ⟶ 1001

FIG. 10

1100

apparatus for non-codebook based
PUSCH transmission

transceiver module    1101

processing module    1102

FIG. 11

1200

1207

processor

computer program

1203

1201

interface circuit

1202

1205

1206

memory

transceiver    antenna

computer program

1204

FIG. 12

chip

processor    1301

interface    1302

memory    1303

FIG. 13

## INTERNATIONAL SEARCH REPORT

<table>
<tr><td colspan="2">International application No.</td></tr>
<tr><td colspan="2"><strong>PCT/CN2022/111585</strong></td></tr>
</table>

**A. CLASSIFICATION OF SUBJECT MATTER**

H04L5/00(2006.01)i;H04B7/06(2006.01)i

According to International Patent Classification (IPC) or to both national classification and IPC

**B. FIELDS SEARCHED**

Minimum documentation searched (classification system followed by classification symbols)

IPC:H04L5/-; H04B7/-

Documentation searched other than minimum documentation to the extent that such documents are included in the fields searched

Electronic data base consulted during the international search (name of data base and, where practicable, search terms used)

CNTXT, CNABS, ENTXTC, CNKI, DWPI, VEN, USTXT, WOTXT, 3GPP, IEEE: 非码本, 预编码, 指示, 探测参考信号, 上行链路共享信道, 下行控制信息, 多天线面板, 波束, 方向, 秩, 传输层数, 资源数量, 传输时机, 传输控制信息, 指示域, 列表, codebook, DCI, PUSCH, SRI, SRS, TRP, precod+, indicat+, beam, direction, layer, TO, TCI, field, list

**C. DOCUMENTS CONSIDERED TO BE RELEVANT**

| Category* | Citation of document, with indication, where appropriate, of the relevant passages | Relevant to claim No. |
|---|---|---|
| X | CN 113271188 A (DATANG MOBILE COMMUNICATIONS EQUIPMENT CO., LTD.) 17 August 2021 (2021-08-17) description, paragraphs 0107-0156 | 1-19 |
| X | WO 2022082373 A1 (BEIJING XIAOMI MOBILE SOFTWARE CO., LTD.) 28 April 2022 (2022-04-28) description, paragraphs 0061-0154 | 1-19 |
| A | WO 2021237666 A1 (QUALCOMM INC. et al.) 02 December 2021 (2021-12-02) entire document | 1-19 |
| A | CN 113824481 A (HUAWEI TECHNOLOGIES CO., LTD.) 21 December 2021 (2021-12-21) entire document | 1-19 |
| A | US 2021337534 A1 (INTEL CORP.) 28 October 2021 (2021-10-28) entire document | 1-19 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 April 2023** | **24 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2022/111585**

| Patent document cited in search report | | | Publication date (day/month/year) | Patent family member(s) | | | Publication date (day/month/year) |
|---|---|---|---|---|---|---|---|
| CN | 113271188 | A | 17 August 2021 | CN | 113271188 | B | 16 December 2022 |
| WO | 2022082373 | A1 | 28 April 2022 | CN | 115004598 | A | 02 September 2022 |
| WO | 2021237666 | A1 | 02 December 2021 | EP | 4158808 | A1 | 05 April 2023 |
| | | | | IN | 202247057200 | A | 14 October 2022 |
| | | | | CN | 115668819 | A | 31 January 2023 |
| CN | 113824481 | A | 21 December 2021 | WO | 2021254506 | A1 | 23 December 2021 |
| US | 2021337534 | A1 | 28 October 2021 | | None | | |

Form PCT/ISA/210 (patent family annex) (July 2022)